# EUROPÄISCHE PATENTSCHRIFT

(11) **EP 3 806 802 B1**
(45) Veröffentlichungstag und Bekanntmachung des Hinweises auf die Patenterteilung: **02.08.2023**
(21) Anmeldenummer: 19730168.2
(22) Anmeldetag: 11.06.2019
(51) Int. Cl.: A61G 5/04, A61G 5/06, B62B 5/02

(54) **TRANSPORTSYSTEM**
TRANSPORT SYSTEM
SYSTÈME DE TRANSPORT

(30) Priorität: 12.06.2018 DE 102018209351
(43) Veröffentlichungstag der Anmeldung: 21.04.2021
(73) Patentinhaber: Haller, Dieter, 82041 Oberhaching (DE)
(72) Erfinder: HALLER, Dieter, 82041 Oberhaching (DE); HALLER, Felix, 86911 Diessen (DE)
(74) Vertreter: Hoefer & Partner Patentanwälte mbB
(86) Internationale Anmeldenummer: PCT/EP2019/065222
(87) Internationale Veröffentlichungsnummer: WO 2019/238685

(56) Entgegenhaltungen:
- DE-A1- 3 422 255
- DE-A1-102011 005 550
- DE-A1-102016 220 869
- US-A1- 2003 127 259
- US-A1- 2006 151 218
- US-A1- 2008 251 300
- US-A1- 2013 341 106

## Beschreibung

Die Erfindung betrifft ein Transportsystem zum Transportieren von Lasten und/oder von Personen. Das Transportsystem ist insbesondere eingerichtet, eine Treppe zu befahren und/oder eine Strecke auf einer schiefen Ebene zurückzulegen. Vorzugsweise ist das Transportsystem eine Treppensteighilfe.

Der Stand der Technik kennt Transportsysteme, bei denen klappbare Hubsysteme zum Heben eines Tragelementes, welches dazu dient, eine Last und/oder eine Person aufzunehmen, vorgesehen sind. Diese weisen allerdings im zusammengeklappten Zustand eine zu große Bauhöhe auf, so dass ein großer Platz zum Lagern des Transportsystems benötigt wird.

Ferner sind aus dem Stand der Technik Treppenlifte bekannt, die Gehbehinderten oder älteren Leuten die Erreichbarkeit von Räumen in höheren Etagen ermöglichen, wodurch sich die Selbstständigkeit und Lebensqualität dieser Personen deutlich erhöht. Der Einbau von solchen Treppenliften ist in Privathäusern denkbar, wird aber auch dort aufgrund hoher Aufwendungen und deren Baugröße häufig nicht vorgenommen. Für Treppenhäuser in Mietobjekten sind Treppenlifte zumeist keine Lösung. In Altbauten, öffentlichen Gebäuden und vielen privaten Häusern sind weder Aufzüge noch Treppenlifte aus technischen oder finanziellen Gründen nachträglich einbaubar.

Weiterhin sind auch ansteigende Plattformen bekannt. Diese sind allerdings meistens weder zuverlässig und sicher noch als kompakt anzusehen.

Die DE 10 2016 220 869 A1 zeigt eine Treppensteighilfe. Die Treppensteighilfe umfasst ein Tragelement, eine Mehrzahl von antreibbaren Rotationselementen, die jeweils um eine Rotationsachse zum Rollen auf eine Rollebene rotierbar sind, und eine Mehrzahl von Hubeinheiten, die jeweils ein erstes Ende aufweisen. Die Hubeinheiten sind jeweils am ersten Ende mit den Rotationselementen verbunden, wobei jeweils ein Bereich der Hubeinheiten in einer zu einer Hauptbewegungsrichtung der Treppensteighilfe senkrechten Richtung zum Heben und/oder Senken der Rotationselemente bewegbar ist.

Die DE 10 2011 005 550 A1 zeigt eine Treppensteigvorrichtung. Die Treppensteigvorrichtung weist ein Gestell, einen an dem Gestell schwenkbar oder fest gelagerten Stützfuß, der in einer eingefahrenen Position und in einer ausgefahrenen Position fixierbar ist, eine an dem Gestell gelagerte, und relativ dazu bewegbare Schubstange und eine Antriebseinheit auf, die dazu ausgebildet ist, die Schubstange relativ zum Gestell entlang einer vorgegebenen Bahn zu heben bzw. zu senken. Hierbei sind die Lagerung des Stützfußes und die durch den Antrieb vorgegebene Bahn der Schubstange derart aufeinander abgestimmt, dass die Schubstange in einem mit dem Stützfuß fest verbundenen Koordinatensystem sich entlang einer geschlossenen zweidimensionalen Kurve bewegt.

Es ist daher Aufgabe der Erfindung, ein Transportsystem vorzuschlagen, das kompakt aufgebaut ist und einen mühelosen Transport von Personen und/oder Lasten, insbesondere über eine Treppe, ermöglicht.

Die Lösung dieser Aufgabe erfolgt durch die Merkmalskombination des unabhängigen Anspruchs.

Das Transportsystem umfasst ein Tragelement, eine Mehrzahl von Hubeinheiten, und eine Mehrzahl von antreibbaren Rotationselementen, die jeweils um eine Rotationsachse zum Rollen auf einer Rollebene rotierbar sind. Jede Hubeinheit ist an einem Ende mit einem antreibbaren Rotationselement aus der Mehrzahl von antreibbaren Rotationselementen verbunden. Ferner weist mindestens eine Hubeinheit aus der Mehrzahl von Hubeinheiten eine Schubkette auf. Die Schubkette ist am Tragelement verschiebbar angeordnet und ausgebildet, um das entsprechende antreibbare Rotationselement zu heben und/oder zu senken. Mit anderen Worten ist die Schubkette derart angeordnet, dass diese im betriebenen Zustand das antreibbare Rotationselement hebt oder senkt. Insbesondere ist die Schubkette auf einer Ebene des Tragelementes verschiebbar angeordnet.

Durch das Vorsehen mindestens einer als Schubkette ausgebildeten Hubeinheit bietet das erfindungsgemäße Transportsystem den Vorteil eines kompakten Aufbaus, da die Schubkette im eingefahrenen Zustand wenig Speicherplatz benötigt und so eine geringe Bauhöhe erlaubt. Ferner kann die Schubkette die erforderliche Kraft zur Verfügung stellen, um die Hubeinheit aus ihrer eingeklappten Position (Nulllage) aufzurichten, wobei das Gewicht des Transportsystems gering gehalten wird.

Jede Hubeinheit des Transportsystems dient vorzugsweise zum Heben und/oder Senken des damit verbundenen antreibbaren Rotationselements. Dadurch kann das jeweilige antreibbare Rotationselement in eine Höhe gebracht werden, so dass beispielsweise eine Stufe einer Treppe überwunden werden kann. Es sei angemerkt, dass das Senken der Hubeinheiten bzw. der Rotationselemente zum Heben des Tragelementes führt, wenn sich das Transportsystem in der Nulllage (eingeklappter Zustand der Hubeinheiten) und auf der Rollebene befindet.

Die antreibbaren Rotationselemente dienen zum Bewegen des Transportsystems in einer Richtung, wenn sie angetrieben werden. Dazu kann bevorzugt ein Antriebselement, insbesondere ein Motor, pro Rotationselement vorgesehen sein.

Im gesenkten Zustand der Hubeinheiten stehen die antreibbaren Rotationselemente in Kontakt mit der Rollebene.

Dies bedeutet, dass durch die Kombination einer Hub- und/oder einer Senkbewegung der antreibbaren Rotationselemente (durch das Antreiben der Hubeinheiten) und einer Rotationsbewegung der antreibbaren Rotationselemente das Transportsystem eine Treppe oder eine horizontale oder schiefe Ebene befahren kann.

Somit ist das Transportsystem insbesondere eingerichtet, eine Treppe zu befahren und/oder eine Strecke auf einer horizontalen oder schiefen Ebene zurückzulegen. Als "Ebene" ist im Rahmen der Erfindung auch eine unebene Fläche zu verstehen. Vorzugsweise ist das Transportsystem eine Treppensteighilfe. Die Rollebene für die Rotationselemente kann also je nach Anwendung des Transportsystems in vorteilhafter Weise eine Stufe einer Treppe oder einen Bereich einer geraden oder schiefen Ebene umfassen. Der Bereich kann beispielsweise eine Unebenheit der Fläche der Ebene umfassen.

Das Transportsystem dient zum Transportieren von Lasten und/oder von Personen.

Die Unteransprüche haben vorteilhafte Aspekte und Weiterbildungen der Erfindung zum Inhalt.

Vorzugsweise können alle Hubeinheiten des Transportsystems jeweils eine Schubkette aufweisen, wobei alle Schubketten am Tragelement verschiebbar angeordnet sind. Somit wird eine kleine Bauhöhe im eingefahrenen Zustand der Schubketten, d.h., im zusammengeklappten Zustand des Transportsystems, erzielt und das Gewicht des Transportsystems kann gering gehalten werden.

Die Schubkette ist vorzugsweise durch ein Antriebselement, insbesondere durch einen Motor, antreibbar. Dies bedeutet, dass die Schubkette durch das Antriebselement bewegbar und verschiebbar am Tragelement ausgebildet ist. Mit anderen Worten wird das mit an der Schubkette angeordnete antreibbare Rotationselement gehoben oder gesenkt, wenn die Schubkette durch das Antriebselement betrieben wird.

Vorzugsweise weist mindestens ein Kettenglied der Schubkette eine durchgängige Öffnung auf. Auf einer Innenseite des mindestens einen Kettengliedes der Schubkette ist vorzugsweise ein Innengewinde gebildet, welches mit einer Gewindewelle eingreifbar ist oder im Eingriff steht. Dabei wird eine Rotation der Welle in eine translatorische Bewegung des mindestens einen Kettengliedes umgewandelt. Somit kann das mindestens eine Kettenglied der Schubkette bzw. die Schubkette durch das Zusammenwirken des Innengewindes mit der Welle am Tragelement verschiebbar angeordnet sein.

Die Welle kann durch ein Antriebselement, insbesondere durch einen Motor, gedreht werden.

Das Innengewinde mit der Gewindewelle ist insbesondere selbsthemmend. Dies bedeutet, dass das Kettenglied bzw. die Schubkette nicht zurückgeschoben werden kann, wenn das Antriebselement versagt.

Die Welle ist am Tragelement, insbesondere auf einer unteren Seite des Tragelements, insbesondere parallel zu einer Ebene des Tragelements, rotierbar angeordnet.

Bevorzugt sind die Öffnungen in den Kettengliedern derart angebracht, dass die Öffnungen eine kontinuierliche Öffnung in Längsrichtung der Schubkette bilden. Die durchgängigen Öffnungen sind vorzugsweise in der Mitte der Kettenglieder ausgebildet. Bevorzugt sind die Öffnungen gleich ausgebildet.

Das antreibbare Rotationselement ist vorzugsweise an einem Ende der Schubkette angeordnet. Dabei entspricht vorzugsweise das Ende der Schubkette einem Ende der Hubeinheit. Insbesondere ist das antreibbare Rotationselement über einen Rotationselementträger am Ende der Schubkette angebracht.

Das antreibbare Rotationselement ist bevorzugt ein omnidirektionales Rad, insbesondere ein Mecanumrad. Andere Arten von omnidirektionalen Rädern wie z.B. das Liddiardrad sind auch möglich. Vorzugsweise ist jedes antreibbare Rotationselement als omnidirektionales Rad ausgebildet.

Um eine Bewegung des Transportsystems in jede beliebige Richtung und eine Rotation des Transportsystems um eine zur Rollebene senkrechte Achse zu ermöglichen, weist das Transportsystem mindestens vier antreibbare Rotationselemente auf, die als omnidirektionale Räder ausgebildet sind. Dabei sind vorzugsweise mindestens vier Rotationselemente an Hubeinheiten angeordnet, welche jeweils eine Schubkette aufweisen.

Vorzugsweise ist die Schubkette in einem Winkel zur Hauptbewegungsrichtung des Transportsystems am Tragelement angeordnet. Mit anderen Worten steht eine Längsachse der Schubkette am Tragelement in einem Winkel zur Hauptbewegungsrichtung des Transportsystems. Somit kann die Schubkette länger ausgebildet werden. Ferner kann vermieden werden, dass das an der Schubkette angeordnete Rotationselement beim Heben und/oder Senken gegen eine Treppenstufe, eine schiefe Ebene oder eine zu überwindende Unebenheit einer Fläche stößt oder nicht richtig auf eine Treppenstufe oder eine Ebene aufgesetzt wird.

Vorzugsweise liegt der Winkel zwischen 0 Grad (ausschließlich) und 90 Grad (ausschließlich). Besonders bevorzugt ist der Winkel so ausgewählt, dass die Schubkette in Richtung einer Diagonalen des Tragelements angeordnet ist. Dadurch kann die Schubkette möglichst lang ausgebildet sein.

Nach einer weiteren bevorzugten Ausgestaltung beträgt der Winkel 90 Grad, so dass die Schubkette senkrecht zur Hauptbewegungsrichtung des Transportsystems angeordnet ist. Dies ist die sicherste Anordnung, so dass das an der Schubkette angeordnete Rotationselement beim Heben und/oder Senken nicht gegen eine Treppenstufe, eine schiefe Ebene oder eine Unebenheit einer Fläche stößt.

Der Winkel kann allerdings auch 0 Grad betragen, wenn es sich herausstellt, dass bei einer Anwendung des Transportsystems eine solche Anordnung der Schubkette am Tragelement vorteilhaft ist.

Als Winkel wird der kleinste Winkel zwischen einer Linie, die parallel zur Hauptbewegungsrichtung ist, und einer Längsachse der Schubkette auf der Ebene des Tragelementes bezeichnet. Mit anderen Worten ist die Schubkette vorzugsweise in einem Winkel zur Hauptbewegungsrichtung des Transportsystems auf einer Ebene des Tragelementes angeordnet.

In einem ausgefahrenen Zustand der Schubkette befindet sich vorzugsweise ein erster Bereich der Schubkette auf der Ebene des Tragelementes, wobei ein zweiter Bereich der Schubkette in einem Winkel in Bezug auf die Ebene des Tragelementes, insbesondere senkrecht zur Ebene des Tragelementes, steht.

Als Hauptbewegungsrichtung ist vorzugsweise die Bewegungsrichtung zu verstehen, in der im Wesentlichen das Transportsystem als Einheit bewegbar ist, um eine Treppe hinauf- oder herabzufahren oder eine Strecke zurückzulegen. Mit anderen Worten entspricht vorzugsweise die Hauptbewegungsrichtung der Richtung, in der sich eine Treppe erstreckt, wenn die Treppe auf eine horizontale Ebene projiziert wird, oder der Richtung einer zurückzulegenden Strecke. Dabei ist für die Bestimmung der Hauptbewegungsrichtung unabhängig, ob das Transportsystem die Treppe hochfährt oder runterfährt. Anders gesagt bedeutet bevorzugt die Hauptbewegungsrichtung des Transportsystems eine Fortbewegungsrichtung des Transportsystems. Wenn das Transportsystem einen vorderen Teil, einen hinteren Teil, einen linken Teil, und einen rechten Teil aufweist, entspricht dann bevorzugt die Hauptbewegungsrichtung des Transportsystems der Richtung vom hinteren Teil zum vorderen Teil. Wenn das Transportsystem eine Längsachse, eine Querachse und eine Hochachse analog zu den Achsen eines Fahrzeugs aufweist, dann entspricht die Hauptbewegungsrichtung des Transportsystems der Längsachse. Die Längsachse entspricht dabei der Fortbewegungsrichtung des Transportsystems. Die Hauptbewegungsrichtung ist vorzugsweise horizontal. Besonders bevorzugt entspricht die Hauptbewegungsrichtung einer Richtung, die senkrecht zur Rotationsachse des Rotationselementes bzw. der Rotationselemente steht und parallel zur Rollebene ist.

Bei einer Mehrzahl von Hubeinheiten, die vorzugsweise jeweils eine Schubkette aufweisen, können die Hubeinheiten übereinander oder nebeneinander angeordnet werden. Dies ist von besonderem Vorteil, wenn die Hubeinheiten senkrecht zur Hauptbewegungsrichtung angeordnet sind.

### Element mitbewegend mit der Schubkette

Vorzugsweise umfasst das Transportsystem ein Element. Das Element ist mit der Schubkette derart gekoppelt, dass sich das Element zusammen mit der Schubkette bewegt, und eingerichtet, eine Rotationsbewegung um seine Längsachse durchzuführen. Durch die Rotationsbewegung des Elementes kann das Rotationselement angetrieben bzw. rotiert werden. Diese Ausgestaltung hat den großen Vorteil, dass ein einziges Antriebselement zum Heben und/oder Senken sowie zum Antreiben bzw. Rotieren des Rotationselementes, wahlweise oder gleichzeitig, benutzt werden kann. Somit wird vermieden, dass die Hubeinheit zwei Antriebselemente besitzen muss, nämlich eines für den Hub und eines für den Antrieb des Rotationselementes, was eine Gewichtsreduzierung zum Ergebnis hat. Dies ist besonders wichtig, wenn alle Hubeinheiten jeweils eine Schubkette aufweisen, mit der ein derartiges Element gekoppelt ist. Dabei muss nämlich im Vergleich zu einem Transportelement, bei welchem zwei Antriebselemente für jedes Paar Schubkette - Rotationselement vorgesehen sind, nur die Hälfte der Antriebselemente immer funktionsfähig sein, damit das Transportsystem benutzt werden kann. Das Transportsystem ist somit redundant, da beim Versagen eines Antriebselementes dieses durch ein anderes vorhandenes Antriebselement ersetzt werden kann. Eine Ausfallsicherheit ist somit in diesem Fall gegeben. Außerdem wirkt das Element als Führung für die Schubkette und trägt zu ihrer Stabilität bei.

Das Element ist in vorteilhafter Weise eingerichtet, ein Drehmoment zu übertragen.

Es ist aber auch möglich, dass sich das Element und die Schubkette unabhängig voneinander bewegen. In diesem Fall sind das Element und die Schubkette nicht miteinander gekoppelt.

### Spezifizierung des Elementes

Vorzugsweise ist die Schubkette aus einer Mehrzahl von Kettengliedern ausgebildet, welche jeweils eine durchgängige Öffnung in Längsrichtung der Schubkette aufweisen. Hierbei verläuft das Element durch die durchgängigen Öffnungen der Kettenglieder der Schubkette. Dadurch ist die Anordnung aus der Schubkette und dem Element kompakt ausgebildet. Ferner wirkt die Schubkette als Führung für das Element, so dass eine zusätzliche Führung entfallen kann. Dies schließt aber nicht aus, dass im Transportsystem eine zusätzliche Führung zum Führen des Elementes vorgesehen sein kann. Weiterhin ist das Element aufgrund dessen Anordnung durch die Schubkette geschützt.

Bevorzugt sind die Öffnungen in den Kettengliedern derart angebracht, dass die Öffnungen eine kontinuierliche Öffnung in Längsrichtung der Schubkette bilden. Die durchgängigen Öffnungen sind vorzugsweise in der Mitte der Kettenglieder ausgebildet. Bevorzugt sind die Öffnungen gleich ausgebildet. Die Öffnungen weisen vorzugsweise jeweils eine komplementäre Form zur Form des Elementes, wobei eine Rotationsbewegung des Elementes in den Öffnungen möglich ist.

Es ist auch möglich, dass die Schubkette sowohl eine durchgängige Öffnung (erste durchgängige Öffnung), durch die das Element verläuft, als auch eine durchgängige Öffnung mit einem Innengewinde (zweite durchgängige Öffnung), wie zuvor beschrieben, aufweist. In diesem Fall ist bevorzugt die zweite durchgängige Öffnung in der Mitte der Schubkette gebildet. Die erste durchgängige Öffnung kann dabei aus der Mitte versetzt angeordnet sein.

Nach einer alternativen bevorzugten Ausgestaltung ist das Element an der Schubkette, insbesondere seitlich, angeordnet. Dies bietet den Vorteil einer einfachen Anordnung des Elementes an der Schubkette. Des Weiteren kann somit ein Transportsystem mit einem derartigen Element ohne dass die Schubkette gewechselt oder nachgearbeitet werden muss nachgerüstet werden. Auch hier wirkt die Schubkette als eine Art Führung für das Element.

Dazu kann vorzugsweise mindestens ein Koppelelement vorgesehen sein, über welches die Schubkette direkt mit dem Element koppelbar bzw. verbindbar ist. Insbesondere ist eine Mehrzahl von Koppelelementen zum direkten Koppeln bzw. Verbinden der Schubkette mit dem Element vorgesehen, die bevorzugt in der Längsrichtung der Schubkette gleichmäßig verteilt sind.

Vorteilhafterweise ist das Element in einer Führung angeordnet. Hiermit ist insbesondere ein weiteres Führungselement zusätzlich zur Schubkette gemeint. Die (zusätzliche) Führung ist in vorteilhafter Weise derart ausgebildet, dass diese an die Form der Schubkette anpassbar ist und der Bewegung der Schubkette folgt. Außerdem ist die Führung vorteilhafterweise derart ausgestaltet, dass eine Rotationsbewegung des Elementes bzw. eine Übertragung der Rotationsbewegung des Elementes nicht blockiert wird. Bevorzugt ist die Führung als Schlauch ausgebildet, insbesondere als Spiralschlauch aus Kunststoff oder Metall.

Das Element kann alternativ vorzugsweise als biegsame Welle ausgebildet sein, die eingerichtet ist, Drehmomente zu übertragen. Die biegsame Welle ermöglicht bevorzugt eine Biegung um 90 Grad.

Alternativ kann bevorzugt das Element als eine Kardangelenkkette ausgebildet sein, die eine Mehrzahl von miteinander verbundenen Kardangelenken umfasst. Somit ist das Element einerseits flexibel (anpassbar an die Form der Schubkette) und kann andererseits ein hohes Drehmoment übertragen. Insbesondere sind die Kardangelenke direkt miteinander verbunden. "Direkt" bedeutet, dass bis auf ein Verbindungsmaterial oder Verbindungselement kein weiteres Bauelement zwischen benachbarten Kardangelenken angeordnet ist.

Zum Bilden der Kardangelenkkette können benachbarte Kardangelenke ineinander gesteckt werden. Alternativ können benachbarte Kardangelenke über ein Verbindungselement, beispielsweise über einen Stift, miteinander verbunden sein.

Wenn eine (zusätzliche) Führung für das Element vorgesehen und das Element als eine Kardangelenkkette ausgebildet ist, ist die Führung vorteilhafterweise derart ausgebildet, dass sich die Kardangelenke nicht zueinander verkippen.

Wenn die Kardangelenkkette an der Schubkette angeordnet ist und eine (zusätzliche) Führung für das Element vorgesehen ist, kann die Kardangelenkkette über die Führung mittels eines Koppelelementes mit der Schubkette gekoppelt sein. Insbesondere ist eine Mehrzahl von Koppelelementen vorgesehen, die über eine Länge der Kardangelenkkette und/oder der Führung gleichmäßig verteilt sind. Vorzugsweise ist jedem Kardangenlenk ein Koppelelement zugeordnet.

Alternativ kann ein Kardangelenk direkt mittels eines Koppelelementes mit der Schubkette gekoppelt sein, wobei das Koppelelement derart ausgebildet ist, dass eine Rotationsbewegung des Kardangelenks um seine Längsachse ermöglicht ist.

"Direkt" bedeutet in diesem Zusammenhang, dass zwischen einem Kardangelenk und der Schubkette nur das Koppelelement angeordnet ist. Dies schließt nicht aus, dass ein Kardangelenk mittels zwei oder mehrerer Koppelelemente mit der Schubkette verbunden ist. Insbesondere ist ein Kardangelenk mit einem Glied der Schubkette gekoppelt. Vorzugsweise ist jedes Kardangelenk direkt mittels eines Koppelementes mit der Schubkette gekoppelt.

Vorzugsweise ist an einem ersten Ende des Elementes ein Drehelement (erstes Drehelement) zum Übertragen einer Rotationsbewegung des Elementes um seine Längsachse auf ein am antreibbaren Rotationselement angebrachtes Drehelement angeordnet. Das erste Ende des Elementes entspricht einem rotationselementseitigen Ende des Elementes.

Das erste Drehelement ist vorzugsweise in Eingriff bringbar mit dem am antreibbaren Rotationselement angebrachten Drehelement. Besonders bevorzugt steht das erste Drehelement im Eingriff mit dem am antreibbaren Rotationselement angebrachten Drehelement.

Insbesondere wenn das Element und die Schubkette nicht miteinander gekoppelt sind, ist das Element derart ausgebildet, dass im ausgefahrenen Zustand der Schubkette, das heißt, wenn das Rotationselement gesenkt ist, das an einem Ende des Elementes angeordnete Drehelement im Eingriff mit dem am antreibbaren Rotationselement angebrachten Drehelement steht.

Besonders bevorzugt sind das am ersten Ende des Elementes angeordnete Drehelement und das am antreibbaren Rotationselement angebrachte Drehelement als Zahnräder ausgebildet.

Mit anderen Worten ist vorzugsweise an einem ersten Ende des Elementes ein Zahnrad angeordnet, welches in Eingriff mit einem Zahnrad bringbar ist, insbesondere mit einem Zahnrad im Eingriff steht, welches am antreibbaren Rotationselement angebracht ist.

Mit anderen Worten ist vorzugsweise ein Zahnradgetriebe in Richtung des Drehmomentpfades zwischen dem Element und dem antreibbaren Rotationselement vorgesehen. Somit kann ein Drehmoment vom Element auf das antreibbare Rotationselement in kompakter Weise übertragen werden.

Vorzugsweise sind die Zahnräder als Kegelräder ausgebildet. Dadurch wird ein noch kompakterer Aufbau erzielt.

### Vorsehen eines gemeinsamen Antriebselementes zum Antreiben der Schubkette oder des Elementes

Zum Antreiben der Schubkette und des Elementes ist vorzugsweise ein gemeinsames Antriebselement vorgesehen, welches über eine Umschaltvorrichtung entweder mit der Schubkette oder dem Element verbindbar ist, so dass das Antriebselement entweder die Schubkette oder das Element antreibt. Durch die Umschaltvorrichtung wird ermöglicht, dass ein einziges Antriebselement sowohl die Schubkette als auch das Element (separat) antreiben kann. Somit wird kein zweites Antriebselement benötigt, wodurch das Gewicht und die Kosten des Transportsystems reduziert werden können. Wenn trotzdem ein zweites Antriebselement vorgesehen ist, kann dies in vorteilhafter Weise als Ersatzantriebselement bei einem Ausfall des ersten Antriebselementes angeschlossen und betrieben werden. Somit wird das Transportsystem im Hinblick auf die Hubeinheit ausfallsicher ausgestaltet.

Es ist allerdings nicht ausgeschlossen, dass die Schubkette und das Element bzw. das Rotationselement durch separate Antriebselemente antreibbar sind. So kann die Schubkette durch ein erstes Antriebselement und das Element bzw. das Rotationselement durch ein zweites Antriebselement angetrieben werden.

### Spezifizierung der Umschaltvorrichtung (erste Ausführung)

Gemäß einer bevorzugten Ausführung weist die Umschaltvorrichtung eine erste Kupplung zwischen dem Antriebselement und der Schubkette und eine zweite Kupplung zwischen dem Antriebselement und dem Element auf. Dabei ist das Antriebselement über die erste Kupplung mit der Schubkette oder über die zweite Kupplung mit dem Element koppelbar. Mit anderen Worten wird die Schubkette im gekoppelten Zustand der ersten Kupplung durch das Antriebselement angetrieben, wobei im gekoppelten Zustand der zweiten Kupplung das Element über das Antriebselement angetrieben wird. Im gekoppelten Zustand der ersten Kupplung befindet sich die zweite Kupplung im ungekoppelten (freien) Zustand (und umgekehrt).

Bevorzugt weist die Schubkette einen Eingriffsbereich auf. Insbesondere erstreckt sich der Eingriffsbereich in Längsrichtung der Schubkette. Der Eingriffsbereich kann bevorzugt als Verzahnung oder eine Vielzahl von stiftförmigen Vorsprüngen ausgebildet sein oder einen Bereich der Kettenglieder umfassen. Das Antriebselement ist vorzugsweise über die erste Kupplung mit einem Übertragungselement (erstes Übertragungselement) verbunden, welches im gekoppelten Zustand der ersten Kupplung im Eingriff mit dem Eingriffsbereich der Schubkette steht und eine Drehbewegung des Antriebelementes auf die Schubkette überträgt. Das erste Übertragungselement kann bevorzugt als ein Zahnrad oder Kettenrad ausgebildet sein. Im gekoppelten Zustand der ersten Kupplung ist der Drehmomentfluss wie folgt: Antriebselement - erste Kupplung - erstes Übertragungselement - Eingriffsbereich der Schubkette - Schubkette.

Vorzugsweise ist ein Drehelement (zweites Drehelement) an einem zweiten Ende des Elementes angeordnet, über welches eine Drehbewegung des Antriebselementes auf das Element übertragbar ist. Das zweite Drehelement ist bevorzugt ein Zahnrad. Das zweite Ende des Elementes entspricht einem antriebselementseitigen Ende.

Das Antriebselement ist vorzugsweise über die zweite Kupplung mit einem Übertragungselement (zweites Übertragungselement) verbunden, welches im gekoppelten Zustand der zweiten Kupplung in Eingriff mit dem am zweiten Ende des Elementes angeordneten Drehelement (zweites Drehelement) bringbar ist, um eine Drehbewegung des Antriebselementes auf das Element zu übertragen. Insbesondere sind das zweite Übertragungselement und das am zweiten Ende des Elementes angeordnete Drehelement derart zueinander angeordnet, dass in einem ausgefahrenen Zustand, besonders im komplett ausgefahrenen Zustand, der Schubkette das zweite Übertragungselement und das am zweiten Ende des Elementes angeordnete Drehelement im Eingriff miteinander stehen. Das zweite Übertragungselement ist bevorzugt ein Zahnrad.

Es ist ferner von Vorteil, wenn zwischen dem zweiten Übertragungselement und dem zweiten Drehelement eine Welle mit einer Durchschubverzahnung vorgesehen ist, die ortsfest am Tragelement angeordnet ist. Die Welle steht über die Durchschubverzahnung im Eingriff mit dem zweiten Übertragungselement an einem ersten Ende und mit dem zweiten Drehelement an einem zweiten Ende. Durch die Durchschubverzahnung kann das Element und somit das antreibbare Rotationselement in jeder beliebigen Position der Schubkette angetrieben werden. In diesem Fall ist im gekoppelten Zustand der zweiten Kupplung der Drehmomentfluss wie folgt: Antriebselement - zweite Kupplung - zweites Übertragungselement - Welle mit Durchschubverzahnung - zweites Drehelement - Element - erstes Drehelement - am antreibbaren Rotationselement angeordnetes Drehelement - antreibbares Rotationselement.

### Spezifizierung der Umschaltvorrichtung (zweite Ausführung)

Nach einer alternativen bevorzugten Ausgestaltung weist die Umschaltvorrichtung eine erste Welle und eine zweite Welle auf. Hierbei ist die erste Welle an der zweiten Welle drehbar angeordnet und weist ein Zahnrad auf, über welches die Schubkette antreibbar ist. Die zweite Welle weist eine Durchschubverzahnung auf, über welche das Element antreibbar ist.

Bevorzugt ist die erste Welle in axialer Richtung (Längsrichtung) an der zweiten Welle fixiert. Dies bedeutet, dass sich die erste Welle in Bezug auf die zweite Welle in axialer Richtung nicht bewegen kann.

Vorzugsweise ist dabei ein Drehelement (zweites Drehelement) an einem zweiten Ende des Elementes angeordnet, welches im Eingriff mit der Durchschubverzahnung steht, um eine Drehbewegung des Antriebselementes auf das Element zu übertragen. Das zweite Drehelement ist bevorzugt ein Zahnrad. Das zweite Ende des Elementes entspricht einem antriebselementseitigen Ende.

Die Welle mit der Durchschubverzahnung ist ferner bevorzugt über die Durchschubverzahnung mit einem Übertragungselement in Eingriff bringbar, welches mit dem Antriebselement zum Übertragen einer Drehbewegung des Antriebselementes verbunden ist.

Bevorzugt weist die Schubkette einen Eingriffsbereich auf. Insbesondere erstreckt sich der Eingriffsbereich in Längsrichtung der Schubkette. Der Eingriffsbereich kann bevorzugt als Verzahnung oder eine Vielzahl von stiftförmigen Vorsprüngen ausgebildet sein oder einen Bereich der Kettenglieder umfassen. Die Schubkette ist über ihren Eingriffsbereich mit dem Zahnrad der ersten Welle in Eingriff bringbar. Dies erfolgt, wenn sich das Antriebselement, insbesondere seine Antriebselementwelle, in einer ersten Stellung befindet.

Zwischen dem Eingriffsbereich der Schubkette und dem Zahnrad der ersten Welle kann bevorzugt eine Vorrichtung vorgesehen sein, die derart ausgebildet ist, eine Drehbewegung der ersten Welle auf die Schubkette zu übertragen. Vorzugsweise weist die Vorrichtung eine erste Vorrichtungswelle und eine zweite Vorrichtungswelle auf, die senkrecht zueinander angeordnet sind. Die erste Vorrichtungswelle weist bevorzugt an einem ersten Ende ein erstes Vorrichtungszahnrad, welches mit dem Zahnrad der ersten Welle im Eingriff steht, und an einem zweiten Ende eine Kegelverzahnung auf. Die zweite Vorrichtungswelle weist vorzugsweise an einem ersten Ende eine Kegelverzahnung und an einem zweiten Ende ein zweites Vorrichtungszahnrad auf. Die erste Kegelverzahnung und die zweite Kegelverzahnung stehen im Eingriff miteinander. Ferner steht das zweite Vorrichtungszahnrad im Eingriff mit dem Eingriffsbereich der Schubkette.

Vorzugsweise ist das Antriebselement derart ausgebildet, dass in einer zweiten Stellung des Antriebselementes, insbesondere einer Antriebselementwelle, die Welle mit der Durchschubverzahnung über die Durchschubverzahnung mit dem Übertragungselement im Eingriff steht.

In der ersten Stellung des Antriebselementes, insbesondere der Antriebselementwelle, ist der Drehmomentfluss bevorzugt wie folgt: Antriebselement - Übertragungselement - Zahnrad der ersten Welle - erste Vorrichtungswelle - zweite Vorrichtungswelle - Eingriffsbereich der Schubkette - Schubkette.

In der zweiten Stellung des Antriebelementes, insbesondere der Antriebselementwelle, ist bevorzugt der Drehmomentfluss wie folgt: Antriebselement - Übertragungselement - Welle mit Durchschubverzahnung - zweites Drehelement - Element - erstes Drehelement - am antreibbaren Rotationselement angeordnetes Drehelement - antreibbares Rotationselement.

Besonders bevorzugt ist die zweite Welle hohl ausgebildet, in welcher die erste Welle drehbar angeordnet ist. Somit ist die Anordnung aus der ersten Welle und der zweiten Welle kompakt ausgebildet.

Insbesondere ist das Antriebselement als Servomotor ausgebildet.

### Zwei Antriebselemente

Nach einer bevorzugten Ausgestaltung der Erfindung können ein erstes Antriebselement und ein zweites Antriebselement zum Antreiben des Elementes und der Schubkette vorgesehen sein. Dabei ist vorzugsweise jedes Antriebselement über einen Umschaltmechanismus zum Antreiben des Elementes oder der Schubkette umschaltbar.

Bevorzugt weist der Umschaltmechanismus eine erste Stellung, eine zweite Stellung und eine dritte Stellung auf. In der ersten Stellung ist die Schubkette durch das erste Antriebselement und das Element durch das zweite Antriebselement antreibbar. In der zweiten Stellung ist die Schubkette durch das zweite Antriebselement antreibbar, wobei das Element nicht antreibbar ist. In der dritten Stellung ist das Element durch das erste Antriebselement antreibbar, wobei die Schubkette nicht antreibbar ist.

In vorteilhafter Weise kann sich die Umschaltvorrichtung im Normalbetrieb des Transportsystems in der ersten Stellung befinden. Bei einem Ausfall eines der Antriebselemente kann das andere Antriebselement über den Umschaltmechanismus auf die Schubkette oder das Element umgeschaltet werden.

Wenn das erste Antriebselement ausfällt und die Schubkette angetrieben werden muss, kann der Umschaltmechanismus von der ersten Stellung in die zweite Stellung gebracht werden, so dass die Schubkette durch das zweite Antriebselement angetrieben werden kann. Wenn dann das Element angetrieben werden muss, wird der Umschaltmechanismus zurück in die erste Stellung gebracht, in der das Element durch das zweite Antriebselement antreibbar ist.

Bei einem Ausfall des zweiten Antriebselementes kann zum Antreiben des Elementes der Umschaltmechanismus von der ersten Stellung in die dritte Stellung gebracht werden, in der das Element durch das erste Antriebselement antreibbar ist. Wenn die Schubkette wieder angetrieben werden muss, wird der Umschaltmechanismus in die erste Stellung gebracht.

### Spezifizierung des Umschaltmechanismus

Bevorzugt weist der Umschaltmechanismus eine erste Eingangswelle, eine zweite Eingangswelle, eine erste Zwischenwelle, eine zweite Zwischenwelle, eine dritte Zwischenwelle, eine erste Ausgangswelle und eine zweite Ausgangswelle auf. Die erste Eingangswelle, die zweite Eingangswelle, die erste Ausgangswelle und die zweite Ausgangswelle verfügen vorzugsweise jeweils über ein Zahnrad. An der ersten Zwischenwelle, der zweiten Zwischenwelle und der dritten Zwischenwelle ist jeweils eine Mehrzahl von Zahnrädern angeordnet.

Die erste Eingangswelle ist mit dem ersten Antriebselement und die zweite Eingangswelle mit dem zweiten Antriebselement verbunden. Vorzugsweise ist die erste Ausgangswelle mit der Schubkette derart verbunden, so dass eine Drehbewegung der ersten Ausgangswelle in eine lineare Bewegung der Schubkette umgewandelt wird. Weiterhin ist die zweite Ausgangswelle mit dem Element derart verbunden, dass eine Drehbewegung der Ausgangswelle auf das Element übertragbar ist.

In der ersten Stellung sind die Zahnräder der ersten Eingangswelle, der ersten Zwischenwelle und der ersten Ausgangswelle derart im Eingriff miteinander, dass eine Drehbewegung der ersten Eingangswelle auf die erste Ausgangswelle übertragbar ist. Des Weiteren sind in der ersten Stellung die Zahnräder der zweiten Eingangswelle, der zweiten Zwischenwelle und der zweiten Ausgangswelle derart im Eingriff miteinander, dass eine Drehbewegung der zweiten Eingangswelle auf die zweite Ausgangswelle übertragbar ist.

In der zweiten Stellung stehen die Zahnräder der ersten Eingangswelle, der Zwischenwellen und der zweiten Ausgangswelle derart im Eingriff miteinander, dass eine Drehbewegung der ersten Eingangswelle auf die zweite Ausgangswelle übertragbar ist.

In der dritten Stellung stehen die Zahnräder der zweiten Eingangswelle, der Zwischenwellen und der ersten Ausgangswelle derart im Eingriff miteinander, dass eine Drehbewegung der zweiten Eingangswelle auf die erste Ausgangswelle übertragbar ist.

Insbesondere stehen in der ersten Stellung das Zahnrad der ersten Eingangswelle mit einem ersten Zahnrad der ersten Zwischenwelle und das Zahnrad der Ausgangswelle mit einem zweiten Zahnrad der ersten Zwischenwelle im Eingriff. Ferner stehen in der ersten Stellung das Zahnrad der zweiten Eingangswelle mit einem ersten Zahnrad der zweiten Zwischenwelle und das Zahnrad der zweiten Ausgangswelle mit einem zweiten Zahnrad der zweiten Zwischenwelle im Eingriff.

Insbesondere stehen in der zweiten Stellung das Zahnrad der ersten Eingangswelle mit dem ersten Zahnrad der ersten Zwischenwelle und das Zahnrad der zweiten Ausgangswelle mit dem zweiten Zahnrad der zweiten Zwischenwelle im Eingriff, wobei ein zweites Zahnrad der ersten Zwischenwelle über ein Zahnrad der dritten Zwischenwelle mit einem dritten Zahnrad der zweiten Zwischenwelle im Eingriff steht. Somit kann eine Drehbewegung der ersten Eingangswelle über die erste, dritte und zweite Zwischenwelle auf die zweite Ausgangswelle übertragen werden.

Insbesondere stehen in der dritten Stellung das Zahnrad der zweiten Eingangswelle mit dem ersten Zahnrad der zweiten Zwischenwelle und das Zahnrad der ersten Ausgangswelle mit dem zweiten Zahnrad der ersten Zwischenwelle im Eingriff, wobei das zweite Zahnrad der zweiten Zwischenwelle über ein Zahnrad der dritten Zwischenwelle mit dem zweiten Zahnrad der ersten Zwischenwelle im Eingriff steht. Somit kann eine Drehbewegung der zweiten Eingangswelle auf die erste Ausgangswelle übertragen werden.

Zum Wechseln zwischen den Stellungen sind vorzugsweise die erste Zwischenwelle und die zweite Zwischenwelle verschiebbar ausgebildet, wobei die dritte Zwischenwelle unbewegbar ist.

Mit anderen Worten sind vorzugsweise im Normalbetrieb zum Antreiben der Schubkette ein erstes Antriebselement und zum Antreiben des Elementes ein zweites Antriebselement vorgesehen, wobei bei einem Ausfall eines der Antriebselemente das andere Antriebselement über den Umschaltmechanismus zum Antreiben der Schubkette oder des Elementes umschaltbar ist.

### Führung der Schubkette

Bevorzugt ist eine Führungsvorrichtung zum Führen der Schubkette vorgesehen.

Die Führungsvorrichtung ist vorzugsweise derart ausgebildet, dass diese eine seitliche Führung der Schubkette ermöglicht. Somit wird die Stabilität der Schubkette erhöht. Insbesondere wird ein Einknicken des Teils der Schubkette, welcher senkrecht zum Tragelement positioniert ist/wird, insbesondere wenn der Teil unter Last steht, vermieden.

Die Führungsvorrichtung kann vorzugsweise ein Teleskop (Teleskopvorrichtung) und/oder einen Scherenhubmechanismus und/oder mindestens eine weitere Schubkette und/oder ein Umlenkungselement und/oder ein Führungsband und/oder mindestens ein formschlüssiges Führungselement und/oder eine Führungsschiene aufweisen.

Das Teleskop ist bevorzugt am Tragelement angeordnet. Wenn die die Schubkette aufweisende Hubeinheit in der Hauptbewegungsrichtung des Transportsystems die letzte ist, ist das Teleskop bevorzugt drei oder vierstufig ausgebildet.

Wenn ein Scherenhubmechanismus vorgesehen ist, sind vorzugsweise ein erstes Ende des Scherenhubmechanismus am Tragelement und ein zweites Ende des Scherenhubmechanismus an der Schubkette bzw. an einem rotationselementseitigen Ende der Schubkette angeordnet.

Der Scherenhubmechanismus weist bevorzugt einen ersten Scherenarm, einen zweiten Scherenarm, einen dritten Scherenarm und einen vierten Scherenarm auf, wobei der erste Scherenarm und der zweite Scherenarm gegeneinander, und der dritte Scherenarm und der vierte Scherenarm gegeneinander verschwenkbar angeordnet sind.

Der erste Scherenarm kreuzt sich mit dem zweiten Scherenarm, wobei sich der dritte Scherenarm mit dem vierten Scherenarm kreuzt.

Besonders bevorzugt sind der erste Scherenarm und der vierte Scherenarm als Parallelogrammführungen ausgebildet. Somit wird eine Parallelität vom Tragelement und der Rotationsachse des Rotationselements erreicht.

Besonders bevorzugt sind zwei Umschaltmechanismen vorgesehen, die jeweils an einer Seite der Schubkette angeordnet sind.

Die weitere Schubkette ist vorzugsweise seitlich an der Schubkette (Hauptschubkette) angeordnet und mit der Schubkette verbunden. So wird die weitere Schubkette beim Antreiben der Schubkette mit der angetriebenen Schubkette mitbewegt und trägt zu deren Führung bei. Die weitere Schubkette ist in vorteilhafter Weise nicht antreibbar und bewegt sich aufgrund der Bewegung der Schubkette. Die weitere Schubkette kann auch als Nebenkette oder Hilfskette bezeichnet werden.

Vorzugsweise ist die Schubkette durch eine seitliche oder zwei seitliche, unter 90° zur Bewegungsrichtung der Schubkette angeordnete weitere Schubketten geführt, oder durch zwei oder mehrere parallel laufende weitere Schubketten, deren Gelenkpunkte zueinander versetzt sind, oder durch drei weitere Schubketten, die sich gegenseitig unter 120° abstützen, geführt.

Das Umlenkungselement dient zum Umlenken der Schubkette bzw. Führen der Schubkette bei einer Umlenkung. Insbesondere ist das Umlenkungselement derart ausgebildet, dass eine 90 Grad-Umlenkung der Schubkette möglich ist.

Das Führungsband ist in vorteilhafter Weise an der Schubkette derart angeordnet, dass ein Einknicken der Schubkette verhindert wird. Das Führungsband ist insbesondere auf der Seite der Schubkette angeordnet, auf der die Kettenglieder der Schubkette nicht miteinander verbunden sind, d.h. gegenüber der Seite, auf der sich die Gelenke der Kettenglieder befinden.

Das Führungsband ist eingerichtet, eine Zugkraft auf die Schubkette in einer Richtung auszuüben, in der die Kettenglieder zusammen bringbar sind.

Bevorzugt ist das Führungsband biegsam ausgebildet, so dass dieses an die jeweilige Form der Schubkette je nach Position der Schubkette angepasst werden kann.

Vorteilhafterweise bleibt eine Länge des Führungsbandes gleich über die ganze Bewegungsstrecke der Schubkette, insbesondere solange ein Krümmungsbereich des Führungsbandes vollständig erhalten bleibt. Im letzteren Fall ändert sich eine Länge eines vertikalen und eines horizontalen Anteils des Führungsbandes, während sich die Schubkette bewegt, wobei eine Länge des Krümmungsbereichs des Führungsbandes gleichbleibt. Mit anderen Worten wird eine Länge des vertikalen Anteils des Führungsbandes desto kleiner, je größer eine Länge des horizontalen Anteils des Führungsbandes wird und umgekehrt. Dabei bleibt die gesamte Länge des Führungsbandes unverändert.

Insbesondere kann das Führungsband je nach Einbausituation eine konstante Länge aufweisen, womit eine konstante Zugbelastung auf die Schubkette wirken kann. Damit wird ein Wegknicken der Kette verhindert.

Das Führungsband kann beispielsweise aus einem elastisch vorformbaren Kunststoff oder einem Metall gebildet sein. So kann das Führungsband zum Beispiel als Gummiband oder Blechband ausgebildet sein.

Nach einer bevorzugten Ausführungsform der Führungsvorrichtung ist ein Führungsband vorgesehen, welches vorzugsweise derart ausgebildet, dass durch das Führungsband mindestens zwei benachbarte Kettenglieder der Schubkette miteinander verbindbar sind, wenn die Kettenglieder in eine Stellung senkrecht zum Tragelement bzw. in eine vertikale Stellung bringbar sind/gebracht werden.

Mit anderen Worten ist das Führungsband vorzugsweise so gestaltet, dass mindestens zwei benachbarte Kettenglieder der Schubkette miteinander verbunden werden, sobald die Kettenglieder in eine Stellung senkrecht zum Tragelement bzw. in eine vertikale Stellung gebracht werden.

Zum Herstellen dieser Verbindung weist das Führungsband vorzugsweise mindestens zwei erste Eingriffselemente auf. Entsprechend weist jedes der mindestens zwei Kettenglieder ein zweites Eingriffselement auf. Die ersten Eingriffselemente sind jeweils mit einem der zweiten Eingriffselemente eingreifbar. Dabei weist jedes erste Eingriffselement eine komplementäre Form zu der Form des zweiten Eingriffselements auf, mit dem dieses eingreifbar ist.

Bevorzugt ist eine Vielzahl von benachbarten Kettenglieder über das Führungsband miteinander verbindbar. Besonders bevorzugt ist jedes Kettenglied über das Führungsband mit einem benachbarten Kettenglied verbindbar.

Insbesondere ist das Führungsband mit einem Ende der Schubkette, insbesondere mit einem Kettenglied der Schubkette, fest verbunden. Das Ende der Schubkette ist dabei in vorteilhafter Weise das Ende, welches als erstes in die zum Tragelement senkrechte Stellung bzw. die vertikale Stellung bringbar ist.

Hierbei ist es auch möglich, dass die Verbindung zwischen dem ersten Ende, insbesondere dem ersten Kettenglied, der Schubkette und dem Führungsband nicht durch das Zusammenwirken von einem ersten Eingriffselement mit einem zweiten Eingriffselement stattfindet. Das heißt, dass in diesem Fall das erste Ende kein zweites Eingriffselement aufweist, wobei auch das Führungsband an dieser Stelle kein erstes Eingriffselement aufweist. In diesem Fall sind alle Kettenglieder bis auf das erste Ende, insbesondere das erste Kettenglied, jeweils mit einem zweiten Eingriffselement versehen.

Die Anzahl der ersten Eingriffselemente ist in vorteilhafter Weise gleich mit der Anzahl der zweiten Eingriffselemente.

Die ersten Eingriffselemente können vorzugsweise als Noppen ausgebildet sein, wobei die zweiten Eingriffselemente als Ausnehmungen, insbesondere Bohrungen, ausgebildet sind. Es ist aber auch vorstellbar, dass die ersten Eingriffselemente vorzugsweise als Ausnehmungen, insbesondere Bohrungen ausgebildet sind, wobei die zweiten Eingriffselemente als Noppen, ausgebildet sind.

Ferner weist die Führungsvorrichtung vorzugsweise ein Umlenkungselement auf, welches ausgebildet ist, die mindestens zwei Kettenglieder der Schubkette über das Führungsband miteinander zu verbinden, wenn die Kettenglieder in die zum Tragelement senkrechte Position bzw. die vertikale Position gebracht werden.

Besonders bevorzugt ist in einem zum Tragelement senkrechten bzw. vertikalen Bereich des Umlenkungselements eine Führung ausgebildet, die das Führungsband in Richtung der Kettenglieder zwingt.

Das mindestens eine formschlüssige Führungselement ist in vorteilhafter Weise eingerichtet, zwei nacheinander folgende Kettenglieder derart miteinander zu verbinden, dass ein Einknicken der Kettenglieder vermieden wird.

Das mindestens eine formschlüssige Führungselement ist vorzugsweise ein Schnappverbindungselement.

Bevorzugt ist jedes Kettenglied über ein formschlüssiges Führungselement mit seinem nacheinander folgenden Kettenglied verbunden.

Das formschlüssige Führungselement ist insbesondere ein federndes Bauteil, insbesondere ein federndes Blech, welches zwei Ausnehmungen aufweist. Jedes von zwei benachbarten Kettengliedern der Schubkette, die zum Vermeiden eines Einknickens miteinander verbunden sind, weist ein Einpresselement, insbesondere einen Einpressstift, auf, wobei jedes Einpresselement in eine der Ausnehmungen eingepresst ist.

Nach einer besonders bevorzugten Ausführungsform der Erfindung weist die Führungsvorrichtung ein Teleskop, ein Führungsband und eine Mehrzahl von formschlüssigen Führungselementen auf.

### Länge der Schubketten bei einer Vielzahl von Schubketten

Besonders bevorzugt weisen mindestens zwei Hubeinheiten aus der Mehrzahl von Hubeinheiten jeweils eine Schubkette auf. Die Hubeinheiten sind am Tragelement in der Hauptbewegungsrichtung nacheinander angeordnet. Hierbei weist die erste Schubkette in der Hauptbewegungsrichtung eine erste Länge und die letzte Schubkette in der Hauptbewegungsrichtung eine zweite Länge auf, die kleiner als die erste Länge ist.

Bei drei Hubeinheiten, die jeweils eine Schubkette aufweisen, kann die mittlere Schubkette eine Länge haben, die zwischen der ersten Länge (einschließlich) und der zweiten Länge (einschließlich) liegt.

Als letzte Schubkette in der Hauptbewegungsrichtung kann im Rahmen der Erfindung vorzugsweise jede Schubkette verstanden werden, welche zum Überwinden nur einer Treppenstufe eingerichtet ist, d.h. einen Hub aufweist, der einer Höhe einer Treppenstufe entspricht. Dies bedeutet, dass mehrere letzte Schubketten vorgesehen sein können, die jeweils eine zweite Länge aufweisen, die kleiner als die erste Länge ist.

Entsprechend ist vorzugsweise im Rahmen der Erfindung als erste Schubkette in der Hauptbewegungsrichtung jede Schubkette zu verstehen, welche zum Überwinden einer Treppenstufe als letzte angehoben wird.

Insbesondere kann die erste Schubkette im eingefahrenen Zustand zusammengelegt sein, wobei die letzte Schubkette eingefahrenen Zustand ausgestreckt sein kann.

Vorzugsweise können eine Mehrzahl von ersten Schubketten und/oder eine Mehrzahl von zweiten Schubketten vorgesehen sein.

Bevorzugt ist das Tragelement als Tragplatte bzw. Plattform ausgebildet.

Wie schon beschrieben, kann das Transportsystem vorzugsweise als Treppensteighilfe benutzt werden. Das Transportsystem kann aber auch beispielsweise in ein Treppenreinigungssystem eingesetzt werden.

Zum Steuern der Hubeinheiten und der antreibbaren Rotationselemente ist vorzugsweise eine Steuereinheit vorgesehen.

Weitere Einzelheiten, Vorteile und Merkmale der vorliegenden Erfindung ergeben sich aus nachfolgender Beschreibung von Ausführungsbeispielen anhand der Zeichnung, wobei gleiche bzw. funktional gleiche Teile jeweils mit dem gleichen Bezugszeichen bezeichnet sind. Es zeigt:
- Fig. 1: eine vereinfachte, schematische perspektivische Ansicht eines ersten Ausführungsbeispiels des Transportsystems der vorliegenden Erfindung,
- Fig. 2: eine vereinfachte, schematische perspektivische Ansicht eines Bereichs des Transportsystems von Figur 1,
- Fig. 3: eine vereinfachte, schematische perspektivische Ansicht eines Bereichs des Transportsystems von Figur 1,
- Fig. 4: eine vereinfachte, schematische perspektivische Ansicht eines Bereichs des Transportsystems von Figur 1,
- Fig. 5: eine vereinfachte, schematische perspektivische Ansicht eines antreibbaren Rotationselements,
- Fig. 6: eine vereinfachte, schematische perspektivische Ansicht eines Bereichs eines Transportsystems gemäß einem zweiten Ausführungsbeispiel der vorliegenden Erfindung,
- Fig. 7 bis 9: vereinfachte perspektivische Ansichten eines Bereichs eines Transportsystems gemäß einem dritten Ausführungsbeispiel der vorliegenden Erfindung,
- Fig. 10: eine vereinfachte, schematische perspektivische Ansicht eines Bereichs eines Transportsystems gemäß einem vierten Ausführungsbeispiel der vorliegenden Erfindung,
- Fig. 11: eine vereinfachte, schematische Ansicht eines Bereichs eines Transportsystems gemäß einem fünften Ausführungsbeispiel der vorliegenden Erfindung,
- Fig. 12: eine vereinfachte, schematische perspektivische Ansicht eines Bereichs eines Transportsystems gemäß einem sechsten Ausführungsbeispiel der vorliegenden Erfindung,
- Fig. 13: eine vereinfachte, schematische Darstellung einer Antriebsvorrichtung für eine Schubkette in einem Transportsystem gemäß einem siebten Ausführungsbeispiel der vorliegenden Erfindung,
- Fig. 14: eine vereinfachte, schematische perspektivische Ansicht von Komponenten der Antriebsvorrichtung von Figur 13,
- Fig. 15: eine vereinfachte, schematische perspektivische Ansicht eines Teils einer Schubkette, die im Transportsystem gemäß dem siebten Ausführungsbeispiel vorgesehen ist,
- Fig. 16: eine vereinfachte, schematische Ansicht eines Teils des Transportsystems gemäß dem siebten Ausführungsbeispiel, wobei sich die Schubkette in einer ersten Position befindet,
- Fig. 17: eine vereinfachte, schematische Ansicht des Teils des Transportsystems von Figur 16, wobei sich die Schubkette in einer zweiten Position befindet,
- Fig. 18: eine vereinfachte, schematische perspektivische Ansicht eines Bereichs eines Transportsystems mit einer Führungsvorrichtung für eine Schubkette gemäß einem achten Ausführungsbeispiel der vorliegenden Erfindung,
- Fig. 19: eine vereinfachte, schematische Ansicht eines Elementes der Führungsvorrichtung von Fig. 18,
- Fig. 20: eine vereinfachte, schematische Ansicht eines Bereichs eines Transportsystems mit einer Führungsvorrichtung für eine Schubkette gemäß einem neunten Ausführungsbeispiel der vorliegenden Erfindung,
- Fig. 21: eine vereinfachte, schematische Ansicht eines Teils der Führungsvorrichtung,
- Fig. 22: eine vereinfachte, schematische perspektivische Ansicht eines Bereichs eines Transportsystems mit einer Führungsvorrichtung für eine Schubkette gemäß einem zehnten Ausführungsbeispiel der vorliegenden Erfindung,
- Fig. 23: eine vereinfachte, schematische perspektivische Ansicht einer ersten Variante eines Teils der Führungsvorrichtung von Figur 22,
- Fig. 24: eine vereinfachte, schematische perspektivische Ansicht einer zweiten Variante eines Teils der Führungsvorrichtung von Figur 22, und
- Fig. 25: eine vereinfachte, schematische Ansicht einer Schubkette, bei der die Führungsvorrichtung von Figur 22 Einsatz finden kann.

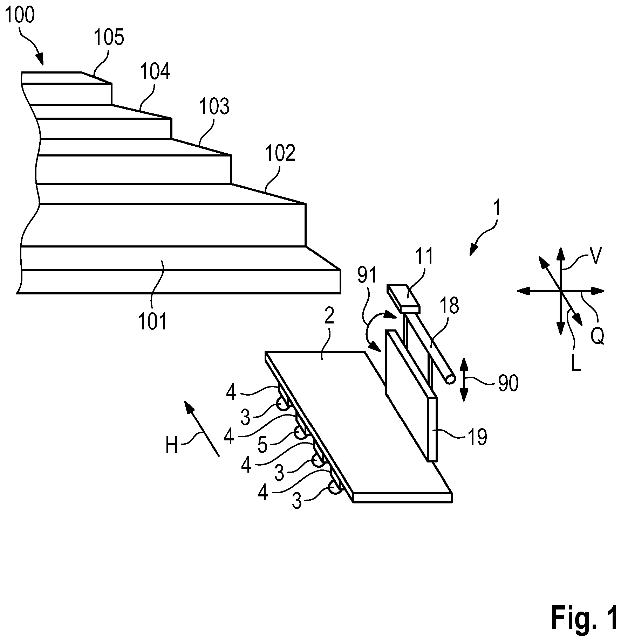

Nachfolgend wird unter Bezugnahme auf die Figuren 1 bis 5 eine Treppensteighilfe 1 gemäß einem ersten Ausführungsbeispiel der vorliegenden Erfindung im Detail beschrieben.

In Figur 1 ist das Transportsystem 1, welches als Treppensteighilfe ausgebildet ist, vor einer Treppe 100, insbesondere einer Wendeltreppe, gezeigt. Allerdings ist das Transportsystem 1 eingerichtet, auch gerade Treppen zu befahren und/oder eine Strecke auf einer horizontalen oder schiefen Ebene zurückzulegen. In Figur 1 sind die Stufen der Treppe 100 mit den Bezugszeichen 101 bis 105 bezeichnet.

Wie aus der Figur 1 ersichtlich ist, umfasst das Transportsystem 1 ein Tragelement 2, eine Mehrzahl von antreibbaren Rotationselementen 3 und eine Mehrzahl von Hubeinheiten 4. Das Transportsystem 1 ist in einer Hauptbewegungsrichtung H bewegbar. Als Hauptbewegungsrichtung H ist die Bewegungsrichtung zu verstehen, in der das Transportsystem 1 als Einheit im Wesentlichen bewegbar ist, um die Treppe 100 zu befahren. Anders gesagt bedeutet die Hauptbewegungsrichtung H des Transportsystems 1 eine Fortbewegungsrichtung oder eine Richtung parallel zu einer Längsachse L des Transportsystems 1. Senkrecht zu der Längsachse L stehen eine Querachse Q und eine Hochachse V.

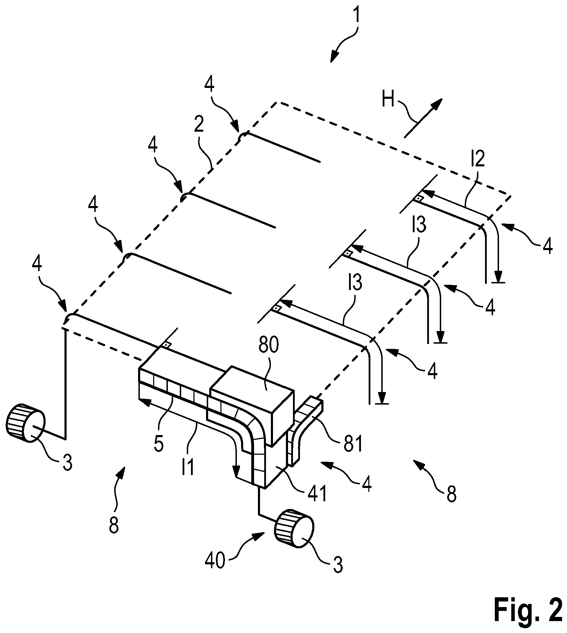

Die Rotationselemente 3 sind jeweils um eine Rotationsachse zum Rollen auf einer Rollebene rotierbar. Ferner weist jede Hubeinheit 4 ein erstes Ende 40 auf, an dem das Rotationselement 3 befestigt ist (Figur 2).

Aus der Figur 1 ist ferner ersichtlich, dass das Tragelement 2 mit einem teleskopartigen Halteelement 18 in Richtung der Hochachse V (Pfeil 90) und einem klappbaren Sitz 19 (Pfeil 91) ausgestattet ist. Weiterhin ist eine Bedienungseinrichtung 11 zum Bedienen des Transportsystems 1 durch einen Bediener vorgesehen. So kann zum Beispiel das Transportsystem 1 über die Bedienungseinrichtung 11 aktiviert werden.

Gemäß Figur 2 weisen alle Hubeinheiten 4 jeweils eine Schubkette 41 auf, die am Tragelement 2 verschiebbar angeordnet sind. Die Schubketten 41 sind ausgebildet, die jeweiligen antreibbaren Rotationselemente 3 zu heben und/oder zu senken. Jedes antreibbare Rotationselement 3 ist an einem ersten Ende der entsprechenden Schubkette 41 angebracht. Das erste Ende einer Schubkette 41 entspricht dem ersten Ende 40 der zugehörigen Hubeinheit 4.

Im Transportsystem 1 sind insgesamt acht Schubketten 41 vorgesehen, aus denen je zwei Schubketten 41 in einer Richtung senkrecht zur Hauptbewegungsrichtung H einander gegenüber angeordnet sind. Eine andere Anzahl von Schubketten 41 und/oder eine andere Anordnung der Schubketten 41 am Tragelement 2 sind aber auch vorstellbar.

Zum Zwecke der Veranschaulichung ist in Figur 2 nur eine Hubeinheit 4, in diesem Fall eine erste Hubeinheit 4 in der Hauptbewegungsrichtung H, im Detail gezeigt. Alle Schubketten 41 sind bis auf ihre Länge gleich ausgebildet. Diesbezüglich weisen insbesondere die zwei ersten Schubketten 41 in der Hauptbewegungsrichtung H eine erste Länge l1 und die zwei letzten Schubketten 41 in der Hauptbewegungsrichtung H eine zweite Länge l2 auf. Wie aus Figur 2 ersichtlich ist, ist die zweite Länge l2 kleiner als die erste Länge 11.

Die Schubketten 41, die in der Hauptbewegungsrichtung H zwischen den ersten Schubketten 41 und den letzten Schubketten 41 angeordnet sind, weisen eine dritte Länge l3 auf. Die dritte Länge l3 ist größer als die zweite Länge l2 und kleiner als die erste Länge 11.

Beispielsweise beträgt die erste Länge l1 600mm, die zweite Länge 12 200 mm und die dritte Länge 400 mm.

Ferner sind alle Schubketten 41 senkrecht zur Hauptbewegungsrichtung H des Transportsystems 1 am Tragelement 2 angeordnet.

Das Transportsystem 1 umfasst ferner pro Schubkette 41 ein Element 5. Jedes Element 5 ist mit der zugehörigen Schubkette 41 derart gekoppelt, dass sich das Element 5 zusammen mit der Schubkette 41 bewegt und eine Drehbewegung um seine Längsachse durchführen kann.

Am Tragelement 2 ist ferner ein Umlenkungselement 80 pro Schubkette 41 vorgesehen, welches dazu dient, die Schubkette 41 beim Heben und/oder Senken des antreibbaren Rotationselementes 3 umzulenken.

Des Weiteren ist für jede Schubkette (Hauptkette) 41 eine weitere Schubkette (Nebenkette) 81 vorgesehen, die seitlich unter 90° zur Bewegungsrichtung der Schubkette 41 (auf der Ebene des Tragelements 2) am Tragelement 2 angebracht und mit der Schubkette 41 verbunden ist. Somit bewegt sich die weitere Schubkette 81 zusammen mit der entsprechenden Schubkette 41, wodurch die Schubkette 41 geführt ist. Die weitere Schubkette 81 wird mit anderen Worten passiv bewegt.

Die weitere Schubkette 81 und das Umlenkungselement 80 sind Teile einer Führungsvorrichtung 8. Für jede Schubkette 41 ist eine Führungsvorrichtung 8, insbesondere dieselbe Führungsvorrichtung 8, vorgesehen.

Das Tragelement 2 ist in Figur 2 gestrichelt gezeichnet, um anzudeuten, dass die Hubeinheiten 4 auf einer unteren Seite (Unterseite) des Tragelements 2 angeordnet sind.

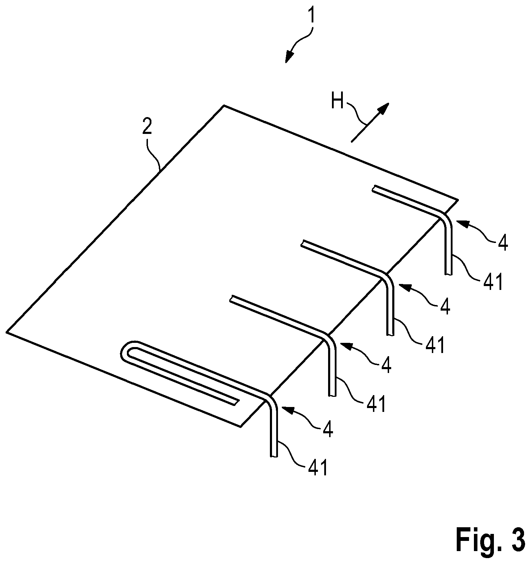

Figur 3 zeigt die Schubketten 41 im eingefahrenen Zustand. Zum Zwecke der Veranschaulichung ist hier nur die Hälfte der Schubketten 41 gezeigt.

In diesem Zustand sind die ersten Schubketten 41 aufwickelt. Insbesondere können die ersten Schubketten 41 jeweils sehr platzsparend in einem Magazin abgespeichert werden. Die letzten und mittleren Schubketten 41 sind im eingefahrenen Zustand aufgrund ihrer kleineren Länge als die ersten Schubketten 41 am Tragelement 2 ausgestreckt.

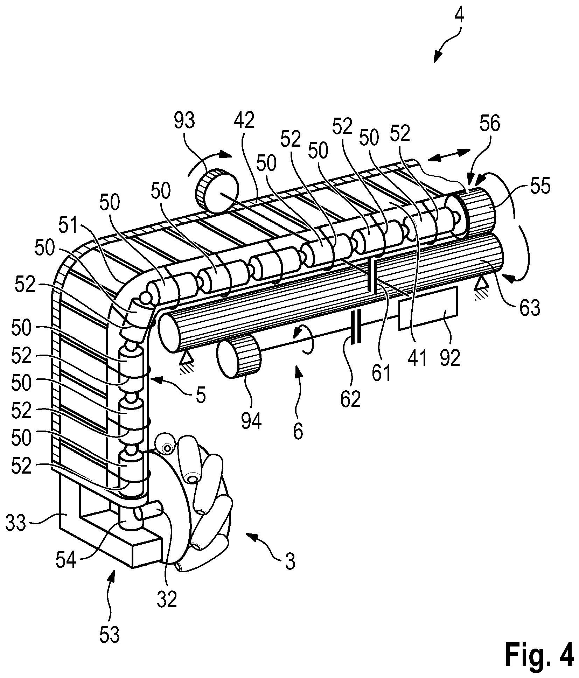

Figur 4 zeigt den detaillierten Aufbau der Hubeinheit 4 bzw. der Schubkette 41 und des Elements 5 sowie eine Anordnung zum Antreiben der Schubkette 41 und des Elements 5. Die folgende Beschreibung bezieht sich auf jede Schubkette 41 und jedes Element 5 des Tragelements 2.

Aus Figur 4 ist ersichtlich, dass das Element 5 seitlich an der Schubkette 41 angeordnet ist. Das Element 5 ist ferner in einer Führung 51, die insbesondere als Schlauch ausgebildet ist, positioniert.

Das Element 5 ist über die Führung 51 mittels einer Vielzahl von Koppelelementen 52 mit der Schubkette 41 verbunden, so dass das Element 5 zusammen mit der Schubkette 41 bewegbar ist.

In vorteilhafter Weise ist das Element 5 als eine Kardangelenkkette ausgebildet, die eine Mehrzahl von direkt miteinander verbundenen Kardangelenken 50 umfasst.

Es ist aber auch möglich, dass das Element 5 als biegsame Welle ausgebildet ist, die eingerichtet ist, Drehmomente zu übertragen.

An einem ersten Ende 53 des Elementes 5 ist ein erstes Drehelement 54, insbesondere ein Zahnrad, angeordnet. Das erste Drehelement 54 steht im Eingriff mit einem am antreibbaren Rotationselement 3 angebrachten Drehelement 32, insbesondere einem Zahnrad.

Die Zahnräder sind als Kegelräder ausgebildet. Ferner ist das antreibbare Rotationselement 3 an einem Rotationselementträger 33 angebracht.

Somit kann eine Drehbewegung bzw. ein Drehmoment des Elementes 5 auf das antreibbare Rotationselement 3 übertragen werden.

Zum Antreiben des Elementes 5 ist ein Antriebselement 92 vorgesehen. Das Antriebselement 92 kann auch zum Antreiben der Schubkette 41 benutzt werden. Dazu ist eine Umschaltvorrichtung 6 vorgesehen. Durch die Umschaltvorrichtung 6 ist das Antriebselement 92 zu einem bestimmten Zeitpunkt entweder mit der Schubkette 41 oder dem Element 5 verbindbar, so dass das Antriebselement 92 zu diesem Zeitpunkt entweder die Schubkette 41 oder das Element 5 antreibt.

Die Umschaltvorrichtung 6 weist eine erste Kupplung 61 zwischen dem Antriebselement 92 und der Schubkette 41 und eine zweite Kupplung 62 zwischen dem Antriebselement 92 und dem Element 5 auf. Die Schubkette 41 wird im gekoppelten Zustand der ersten Kupplung 61 durch das Antriebselement 92 angetrieben, wobei im gekoppelten Zustand der zweiten Kupplung 62 das Element 5 über das Antriebselement 92 angetrieben wird. Im gekoppelten Zustand der ersten Kupplung 61 befindet sich die zweite Kupplung 62 im ungekoppelten (freien) Zustand. Entsprechend befindet sich im gekoppelten Zustand der zweiten Kupplung 62 die erste Kupplung 61 im ungekoppelten (freien) Zustand.

Weiterhin weist die Schubkette 41 einen Eingriffsbereich 42 auf. Insbesondere erstreckt sich der Eingriffsbereich 42 in Längsrichtung der Schubkette 41. Der Eingriffsbereich 42 ist in diesem Ausführungsbeispiel als Verzahnung ausgebildet. Das Antriebselement 92 ist über die erste Kupplung 61 mit einem Übertragungselement 93 (erstes Übertragungselement) verbunden, welches im gekoppelten Zustand der ersten Kupplung 61 im Eingriff mit dem Eingriffsbereich 42 der Schubkette 41 steht und eine Drehbewegung des Antriebelementes 92 auf die Schubkette 41 überträgt. Das erste Übertragungselement 93 ist in diesem Ausführungsbeispiel als ein Zahnrad ausgebildet. Im gekoppelten Zustand der ersten Kupplung 61 ist der Drehmomentfluss wie folgt: Antriebselement 92 - erste Kupplung 61 - erstes Übertragungselement 93 - Eingriffsbereich der Schubkette 42 - Schubkette 41.

An einem zweiten Ende 56 des Elementes 5 ist ein Drehelement 55 (zweites Drehelement) angeordnet, über welches eine Drehbewegung des Antriebselementes 92 auf das Element 5 übertragbar ist. Das zweite Drehelement 55 ist diesem Ausführungsbeispiel ein Zahnrad. Das zweite Ende 56 des Elementes entspricht einem antriebselementseitigen Ende.

Das Antriebselement 92 ist über die zweite Kupplung 62 mit einem Übertragungselement 94 (zweites Übertragungselement) verbunden.

Zwischen dem zweiten Übertragungselement 94 und dem zweiten Drehelement 55 in Richtung des Drehmomentflusses ist eine Welle 63 mit einer Durchschubverzahnung vorgesehen. Die Welle 63 ist ortsfest am Tragelement 2 angeordnet und steht über die Durchschubverzahnung im Eingriff mit dem zweiten Übertragungselement 94 an einem ersten Ende und mit dem zweiten Drehelement 55 an einem zweiten Ende.

Durch die Durchschubverzahnung kann das Element 5 und somit das antreibbare Rotationselement 3 in jeder beliebigen Position der Schubkette 41 angetrieben werden. Im gekoppelten Zustand der zweiten Kupplung 62 ist der Drehmomentfluss wie folgt: Antriebselement 92 - zweite Kupplung 62 - zweites Übertragungselement 94 - Welle 63 mit Durchschubverzahnung - zweites Drehelement 55 - Element 5 - erstes Drehelement 54 - am antreibbaren Rotationselement 3 angeordnetes Drehelement 33 - antreibbares Rotationselement 3.

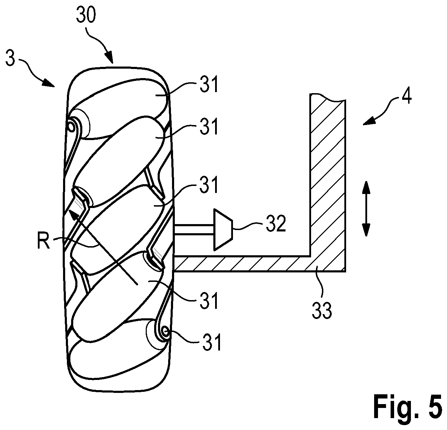

Die Figur 5 zeigt eine bevorzugte Ausführungsform der antreibbaren Rotationselemente 3.

Dementsprechend weisen jeweils die antreibbaren Rotationselemente 3 eine Lauffläche 30 auf. Die Lauffläche 30 ist derart ausgebildet, dass die antreibbaren Rotationselemente 3 in einer zu der Rotationsrichtung des Rotationselements 3 unterschiedlichen Richtung R bewegbar sind. Somit kann sich zum einen das Transportsystem 1 durch das kombinierte Antreiben der antreibbaren Rotationselemente 3 in jeder Richtung bewegen. Zum anderen wird ein raumsparendes Transportsystem 1 bereitgestellt.

Insbesondere ist jedes antreibbare Rotationselement 3 als Mecanum-Rad ausgebildet. Ein Mecanum-Rad ist derart ausgestaltet, dass auf seinem Umfang mehrere drehbar gelagerte tonnenförmige Rollen 31 in einem Winkel zur Achse des gesamten Rades angebracht sind. Diese Rollen 31 haben keinen direkten Antrieb und können sich frei um ihre schräge Lagerachse drehen.

Andere omnidirektionale Räder als das Mecanum-Rad, wie z.B. das Liddiard-Rad, können ebenso benutzt werden.

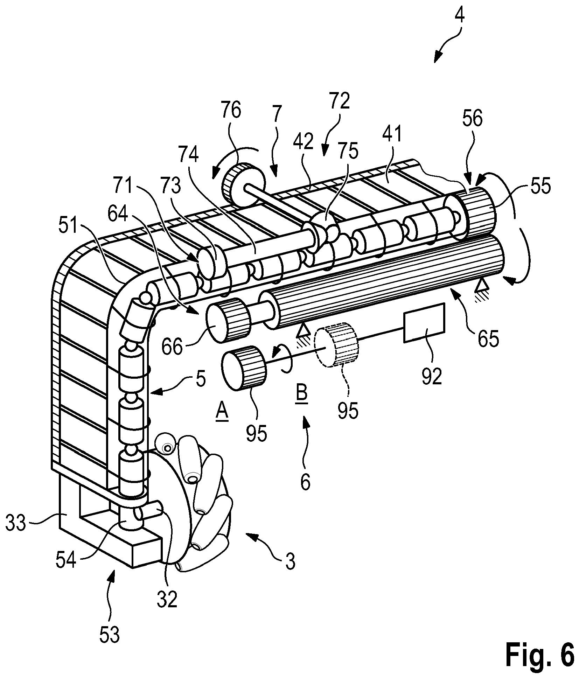

Figur 6 zeigt den detaillierten Aufbau der Hubeinheit 4 bzw. der Schubkette 41 und des Elements 5 sowie eine Anordnung zum Antreiben der Schubkette 41 und des Elements 5 gemäß einem zweiten Ausführungsbeispiel. Die folgende Beschreibung bezieht sich auf jede Schubkette 41 und jedes Element 5 des Tragelements 2.

Die Grundstruktur des Transportsystems 1 gemäß dem zweiten Ausführungsbeispiel entspricht derjenigen des Transportsystems 1 gemäß dem ersten Ausführungsbeispiel.

Im Gegensatz dazu weist die Umschaltvorrichtung 6 hier eine erste Welle 64 und eine zweite Welle 65 auf. Dabei ist die erste Welle 64 an der zweiten Welle 65 drehbar angeordnet und weist ein Zahnrad 66 auf, über welches die Schubkette 41 antreibbar ist. Die zweite Welle 65 weist eine Durchschubverzahnung auf, über welche das Element 5 antreibbar ist.

Die erste Welle 64 ist in axialer Richtung (Längsrichtung) an der zweiten Welle 65 fixiert. Dies bedeutet, dass sich die erste Welle 64 in Bezug auf die zweite Welle 65 in axialer Richtung nicht bewegen kann.

Insbesondere ist die zweite Welle 65 hohl ausgebildet, in welcher die erste Welle 64 drehbar angeordnet ist. Somit ist die Anordnung aus der ersten Welle 64 und der zweiten Welle 65 kompakt ausgebildet.

Das Antriebselement 92 ist derart ausgebildet, dass in einer ersten Stellung A des Antriebselementes 92 die erste Welle 64 im Eingriff mit einem Übertragungselement 95 steht. Das Übertragungselement 95 ist eingerichtet, eine Drehbewegung des Antriebelementes 92 zu übertragen. In einer zweiten Stellung B des Antriebselementes 92 steht die zweite Welle 65 über die Durchschubverzahnung mit dem Übertragungselement 95 im Eingriff.

Zwischen dem Eingriffsbereich 42 der Schubkette 41 und dem Zahnrad 66 der ersten Welle 64 ist eine Vorrichtung 7 vorgesehen, die derart ausgebildet ist, eine Drehbewegung der ersten Welle 64 auf die Schubkette 41 zu übertragen.

Des Weiteren weist die Vorrichtung 7 eine erste Vorrichtungswelle 71 und eine zweite Vorrichtungswelle 72 auf, die senkrecht zueinander angeordnet sind.

Die erste Vorrichtungswelle 71 weist an einem ersten Ende ein erstes Vorrichtungszahnrad 73, welches mit dem Zahnrad 66 der ersten Welle 64 im Eingriff steht. An einem zweiten Ende ist die erste Vorrichtungswelle 71 mit einer Kegelverzahnung 74 versehen.

Die zweite Vorrichtungswelle 72 weist an einem ersten Ende eine Kegelverzahnung 75 und an einem zweiten Ende ein zweites Vorrichtungszahnrad 76 auf.

Die erste Kegelverzahnung 74 und die zweite Kegelverzahnung 75 stehen im Eingriff miteinander. Ferner steht das zweite Vorrichtungszahnrad 76 im Eingriff mit dem Eingriffsbereich 42 der Schubkette 41.

In der ersten Stellung A des Antriebelementes 92 ist der Drehmomentfluss wie folgt: Antriebselement 92 - Übertragungselement 95 - Zahnrad 66 der ersten Welle 64 - erste Vorrichtungswelle 71 - zweite Vorrichtungswelle 72 - Eingriffsbereich 42 der Schubkette 41 - Schubkette 41.

Das Drehelement 55 (zweites Drehelement) am zweiten Ende 56 des Elementes 5 steht im Eingriff mit der Durchschubverzahnung der zweiten Welle 65, um eine Drehbewegung des Antriebselementes 92 auf das Element 5 zu übertragen.

In der zweiten Stellung B des Antriebelementes 92 ist der Drehmomentfluss wie folgt: Antriebselement 92 - Übertragungselement 95 - zweite Welle 65 mit Durchschubverzahnung - zweites Drehelement 55 - Element 5 - erstes Drehelement 54 - am antreibbaren Rotationselement 3 angeordnetes Drehelement 32 - antreibbares Rotationselement 3.

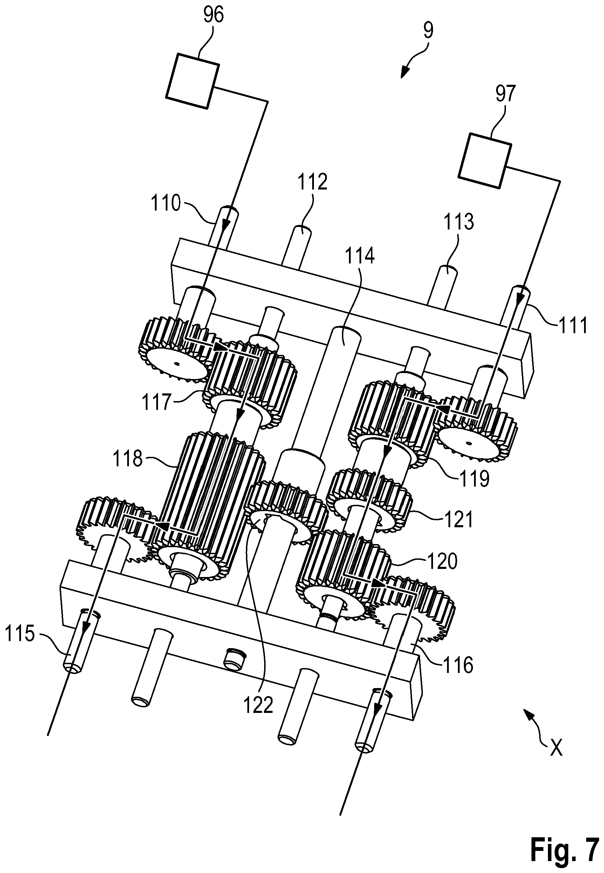

Die Figuren 7 bis 9 beziehen sich auf ein drittes Ausführungsbeispiel des Transportsystems 1.

Die Grundstruktur des Transportsystems 1 gemäß dem dritten Ausführungsbeispiel entspricht derjenigen des Transportsystems 1 gemäß dem ersten Ausführungsbeispiel.

Diese Transportsysteme 1 unterscheiden sich voneinander jedoch dadurch, dass im Transportsystem 1 gemäß dem dritten Ausführungsbeispiel ein erstes Antriebselement 96 und ein zweites Antriebselement 97 zum Antreiben des Elementes 5 und der Schubkette 41 vorgesehen sind. Dabei ist jedes Antriebselement über einen Umschaltmechanismus 9 zum Antreiben des Elementes 5 oder der Schubkette 41 umschaltbar.

Der Umschaltmechanismus 9 hat eine erste Stellung X, eine zweite Stellung Y und eine dritte Stellung Z auf.

In der ersten Stellung X ist die Schubkette 41 durch das erste Antriebselement 96 und das Element 5 durch das zweite Antriebselement 97 antreibbar. Figur 7 zeigt die erste Stellung X des Umschaltmechanismus 9.

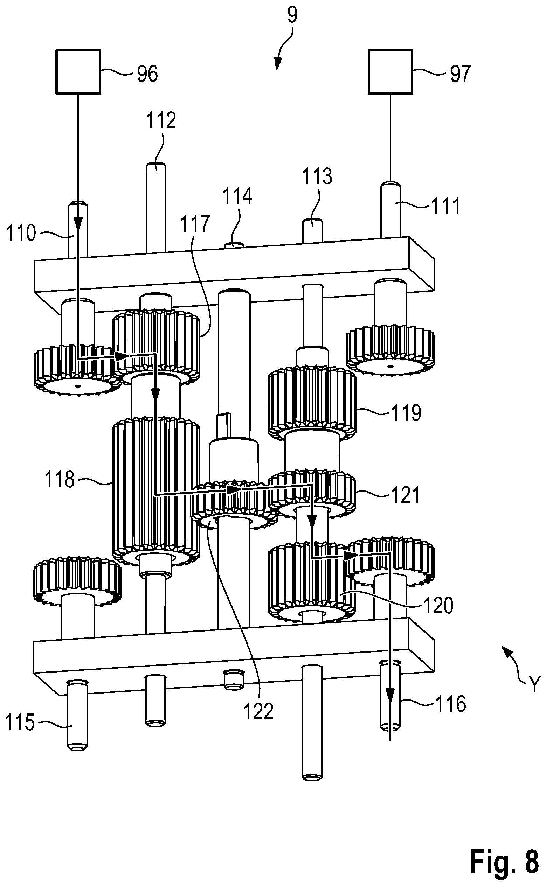

In der zweiten Stellung Y ist das Element 5 durch das erste Antriebselement 96 antreibbar, wobei die Schubkette 41 nicht antreibbar ist. Figur 8 zeigt die zweite Stellung Y des Umschaltmechanismus 9.

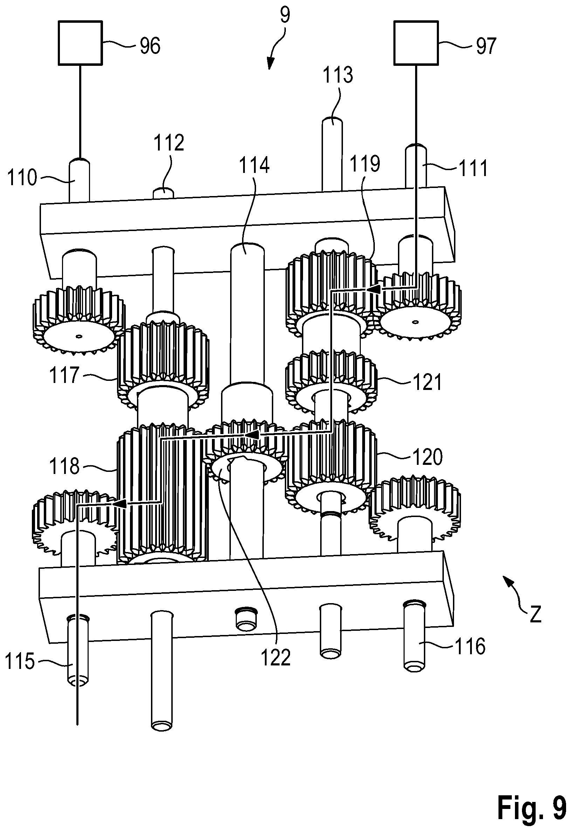

In der dritten Stellung Z ist die Schubkette 41 durch das zweite Antriebselement 97 antreibbar, wobei das Element 5 nicht antreibbar ist. Figur 9 zeigt die dritte Stellung Z des Umschaltmechanismus 9.

Bevorzugt weist der Umschaltmechanismus 9 eine erste Eingangswelle 110, eine zweite Eingangswelle 111, eine erste Zwischenwelle 112, eine zweite Zwischenwelle 113, eine dritte Zwischenwelle 114, eine erste Ausgangswelle 115 und eine zweite Ausgangswelle 116 auf.

Die erste Eingangswelle 110, die zweite Eingangswelle 111, die erste Ausgangswelle 115 und die zweite Ausgangswelle 116 weisen jeweils ein Zahnrad auf. An der ersten Zwischenwelle 112, der zweiten Zwischenwelle 113 und der dritten Zwischenwelle 114 ist jeweils eine Mehrzahl von Zahnrädern angeordnet.

Insbesondere weist die erste Zwischenwelle 112 ein erstes Zahnrad 117 und ein zweites Zahnrad 118 auf. Die zweite Zwischenwelle 113 weist ein erstes Zahnrad 119, ein zweites Zahnrad 120 und ein drittes Zahnrad 121 auf. Die dritte Zwischenwelle 114 weist ein Zahnrad 122 auf.

Wie aus Figuren 7 bis 9 ersichtlich ist, ist die erste Eingangswelle 110 mit dem ersten Antriebselement 96 und die zweite Eingangswelle 111 mit dem zweiten Antriebselement 97 verbunden. Vorzugsweise ist die erste Ausgangswelle 115 mit der Schubkette 41 derart verbunden, dass eine Drehbewegung der ersten Ausgangswelle 115 in eine lineare Bewegung der Schubkette 41 umgewandelt wird. Weiterhin ist die zweite Ausgangswelle 116 mit dem Element 5 derart verbunden, dass eine Drehbewegung der Ausgangswelle 116 auf das Element 5 übertragbar ist.

In der ersten Stellung X des Umschaltmechanismus 9 (Figur 7) stehen das Zahnrad der ersten Eingangswelle 110 im Eingriff mit dem ersten Zahnrad 117 der ersten Zwischenwelle 112 und das zweite Zahnrad 118 der ersten Zwischenwelle 112 im Eingriff mit dem Zahnrad der ersten Ausgangswelle 115. Weiterhin stehen in der ersten Stellung X des Umschaltmechanismus 9 (Figur 7) das Zahnrad der zweiten Eingangswelle 111 im Eingriff mit dem ersten Zahnrad 119 der zweiten Zwischenwelle 113 und das zweite Zahnrad 120 der zweiten Zwischenwelle 113 im Eingriff mit dem Zahnrad der zweiten Ausgangswelle 116.

In der zweiten Stellung Y des Umschaltmechanismus 9 (Figur 8) stehen das Zahnrad der ersten Eingangswelle 110 mit dem ersten Zahnrad 117 der ersten Zwischenwelle 112 und das Zahnrad der zweiten Ausgangswelle 116 mit dem zweiten Zahnrad 120 der zweiten Zwischenwelle 113 im Eingriff. Dabei steht ein zweites Zahnrad 118 der ersten Zwischenwelle 112 über das erste Zahnrad 122 der dritten Zwischenwelle 114 mit einem dritten Zahnrad 121 der zweiten Zwischenwelle 113 im Eingriff. Somit kann eine Drehbewegung der ersten Eingangswelle 110 über die erste, dritte und zweite Zwischenwelle 112, 113, 114 auf die zweite Ausgangswelle 116 übertragen werden.

In der dritten Stellung Z des Umschaltmechanismus 9 (Figur 9) stehen das Zahnrad der zweiten Eingangswelle 111 mit dem ersten Zahnrad 119 der zweiten Zwischenwelle 113 und das Zahnrad der ersten Ausgangswelle 115 mit dem zweiten Zahnrad 118 der ersten Zwischenwelle 112 im Eingriff. Dabei steht das zweite Zahnrad 120 der zweiten Zwischenwelle 113 über das erste Zahnrad 122 der dritten Zwischenwelle 114 mit dem zweiten Zahnrad 118 der ersten Zwischenwelle 112 im Eingriff. Somit kann eine Drehbewegung der zweiten Eingangswelle auf die erste Eingangswelle übertragen werden.

Im Falle eines Ausfalls des ersten Antriebselementes 96 kann zum Antreiben der Schubkette 41 der Umschaltmechanismus 9 von der ersten Stellung X in die dritte Stellung Z gebracht werden, so dass die Schubkette 41 durch das zweite Antriebselement 97 angetrieben wird. Wenn das Element 5 im Anschluss daran angetrieben werden muss, wird der Umschaltmechanismus 9 zurück in die erste Stellung X gebracht, in der das zweite Antriebselement 97 das Element 5 antreibt.

Bei einem Ausfall des zweiten Antriebselementes 97 kann entsprechend zum Antreiben des Elementes 5 der Umschaltmechanismus 9 von der ersten Stellung X in die zweite Stellung Y gebracht werden, in der das Element 5 durch das erste Antriebselement 96 antreibbar ist. Wenn die Schubkette 41 wieder angetrieben werden muss, wird der Umschaltmechanismus 9 in die erste Stellung X gebracht.

Durch das Vorsehen des Umschaltmechanismus 9 kann das Transportsystem 1 problemlos weiterbenutzt werden, auch wenn eines der Antriebselemente 96, 97 während der Verwendung des Transportsystems 1 versagt. Sobald die Benutzung des Transportsystems 1 zu Ende ist, kann das defekte Antriebselement ersetzt werden.

Aus dem Vergleich der Figuren 7 bis 9 ergibt sich, dass zum Wechseln zwischen der ersten Stellung X, der zweiten Stellung Y und der dritten Stellung Z vorzugsweise die erste Zwischenwelle 112 und die zweite Zwischenwelle 113, die verschiebbar ausgebildet sind, insbesondere in entgegengesetzte Richtungen, verschoben werden müssen. Dazu kann vorzugsweise ein linearer Servomotor benutzt werden.

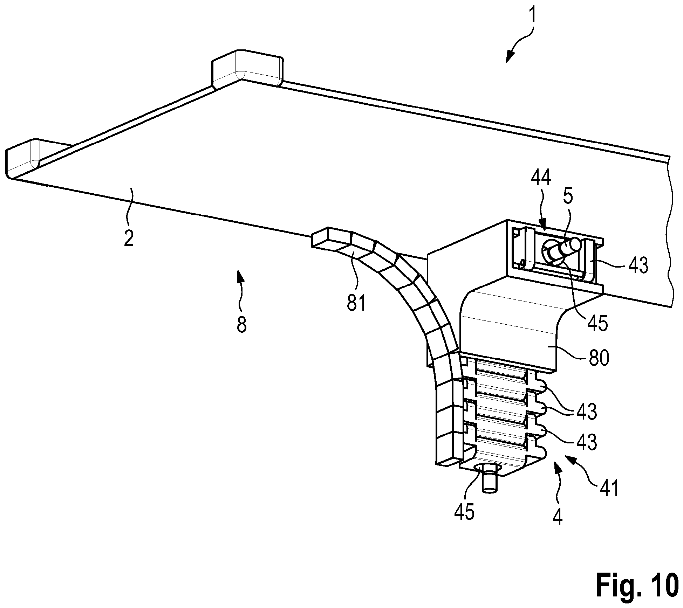

Figur 10 zeigt einen Bereich eines Transportsystems 1 gemäß einem vierten Ausführungsbeispiel der Erfindung.

Das Transportsystem 1 des vierten Ausführungsbeispiels unterscheidet sich von demjenigen der vorherigen Ausführungsbeispiele grundsätzlich dadurch, dass im vierten Ausführungsbeispiel das Element 5 nicht seitlich an der Schubkette 41 angeordnet ist, sondern durch eine durchgängige Öffnung 44 der Schubkette 41 in Längsrichtung der Schubkette 41 verläuft. Die Öffnung 45 der Schubkette 41 ist durch identische durchgängige Öffnungen 45 in den Kettengliedern 43 gebildet.

Die durchgängigen Öffnungen 45 sind in der Mitte der Kettenglieder 43 ausgebildet. Ferner weisen die Öffnungen 45 jeweils eine komplementäre Form zur Form des Elementes 5 und sind derart dimensioniert, dass eine Rotationsbewegung des Elementes 5 in den Öffnungen 45 möglich ist.

Ein weiterer Unterschied liegt daran, dass hierbei das Element 5 direkt, d.h., ohne zusätzliches Führungselement, in der Schubkette 41 angeordnet ist. In dieser Ausgestaltung wirkt die Schubkette 41 selbst als Führung für das Element 5. Allerdings ist es auch vorstellbar, dass das Element in einem Führungselement 5 positioniert ist.

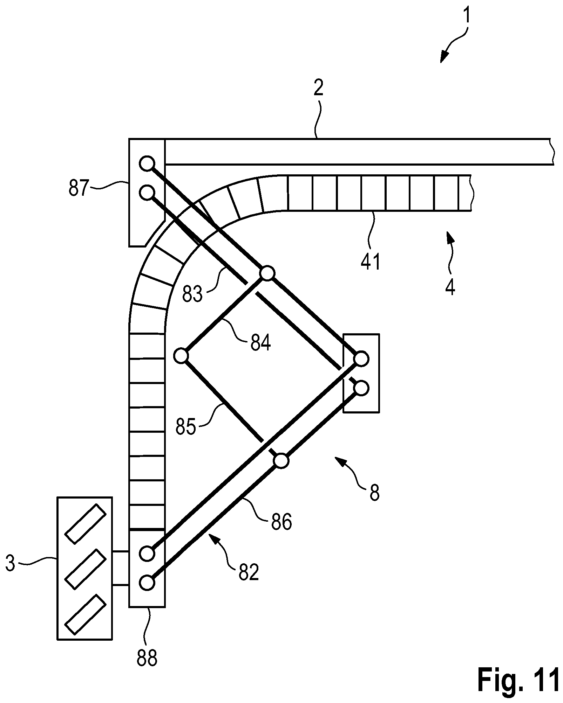

Figur 11 zeigt einen Bereich eines Transportsystems 1 gemäß einem fünften Ausführungsbeispiel der Erfindung.

Bei dem Transportsystem 1 gemäß dem fünften Ausführungsbeispiel weist die Führungsvorrichtung 8 statt einer weiteren Schubkette einen Scherenhubmechanismus 82 auf.

Dabei ist ein erstes Ende 87 des Scherenhubmechanismus 82 am Tragelement 2 angebracht. Ferner ist ein zweites Ende 88 des Scherenhubmechanismus 82 mit der Schubkette 41 an einem rotationselementseitigen Ende der Schubkette 41 verbunden.

Der Scherenhubmechanismus 82 weist einen ersten Scherenarm 83, einen zweiten Scherenarm 84, einen dritten Scherenarm 85 und einen vierten Scherenarm 86 auf, wobei der erste Scherenarm 83 und der zweite Scherenarm 84 gegeneinander, und der dritte Scherenarm 85 und der vierte Scherenarm 86 gegeneinander schwenkbar angeordnet sind.

Der erste Scherenarm 83 kreuzt sich mit dem zweiten Scherenarm 84, wobei sich der dritte Scherenarm 85 mit dem vierten Scherenarm 86 kreuzt.

Besonders bevorzugt sind der erste Scherenarm 83 und der vierte Scherenarm 86 als Parallelogrammführungen ausgebildet. Somit wird eine Parallelität vom Tragelement 1 und der Rotationsachse des Rotationselements 3 erreicht.

Weiterhin ist das erste Ende 87 des Scherenhubmechanismus 82 derart ausgestaltet, dass eine Umlenkung und/oder Führung der Schubkette 41 unterstützt wird. Somit kann ein zusätzliches Umlenkungselement entfallen.

In Figur 11 befindet sich die Schubkette 41 in einem ausgefahrenen Zustand (gesenkter Zustand des antreibbaren Rotationselementes 3, so dass der Scherenhubmechanismus 82 ausgeklappt ist. Es sei angemerkt, dass der Scherenhubmechanismus 82 aufgrund seiner Verbindung mit dem Tragelement 2 am ersten Ende 87 und mit der Schubkette 41 am zweiten Ende 88 aus- und einklappbar ist. Der Scherenhubmechanismus 82 wird also durch die Bewegung der Schubkette 41 und nicht durch ein (separates) Antriebselement bewegt.

Das Ziel von Figur 11 ist, die Führung der Schubkette 41 gemäß dem fünften Ausführungsbeispiel darzustellen, daher sind das Element 5 und weitere Konstruktionsdetails hier nicht gezeichnet.

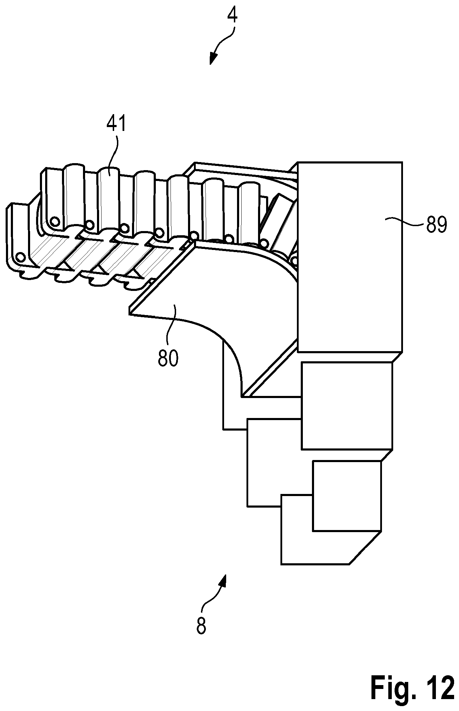

Figur 12 zeigt einen Bereich eines Transportsystems 1 gemäß einem fünften Ausführungsbeispiel der Erfindung.

In diesem Ausführungsbeispiel weist die Führungsvorrichtung 8 neben dem Umlenkungselement 80 ein Teleskop 89 auf, welches am Tragelement 2 angeordnet ist.

Das Teleskop 89 erstreckt sich senkrecht zum Tragelement 2 bzw. zur Unterseite des Tragelements 2 und trägt zu der Führung der Schubkette 41 bei Heben und/oder Senken des antreibbaren Rotationselementes 3 bei.

In Figur 12 befindet sich das Teleskop 89 in einem ausgefahrenen Zustand.

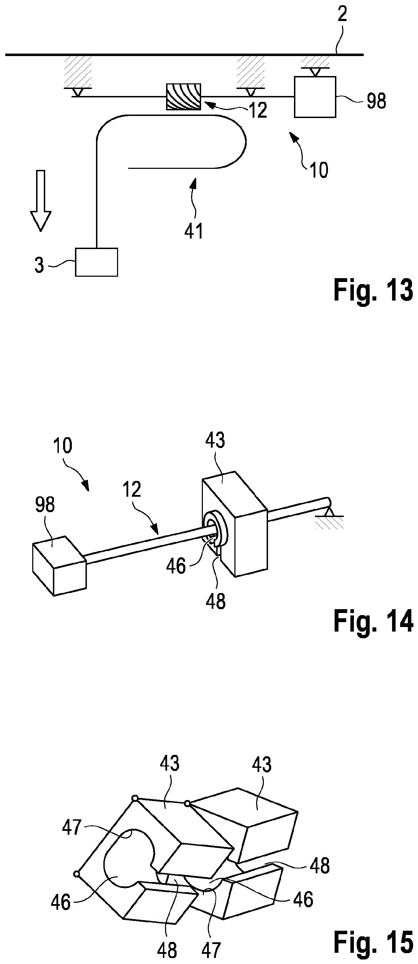

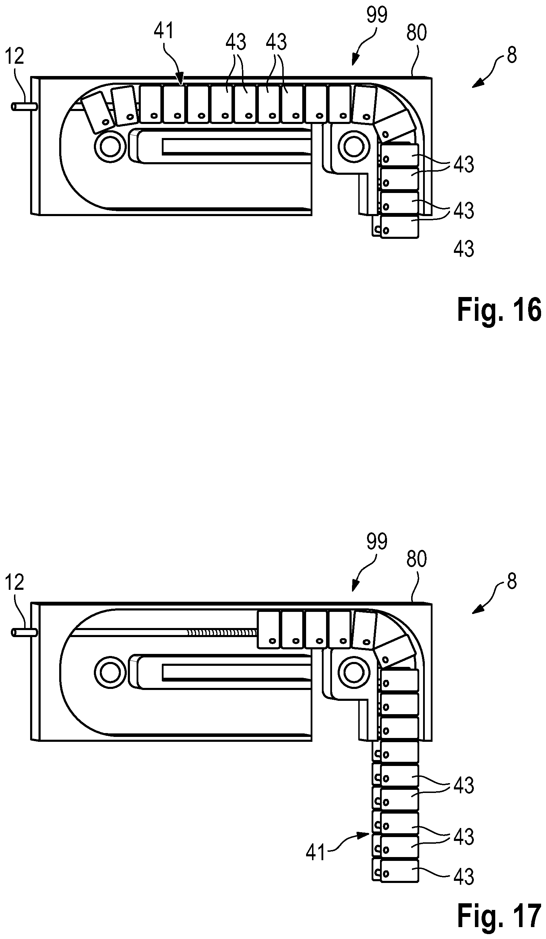

Die Figuren 13 bis 17 beziehen sich auf eine Antriebsvorrichtung 10 für eine Schubkette 41 in einem Transportsystem 1 gemäß einem siebten Ausführungsbeispiel der vorliegenden Erfindung. Figur 16 zeigt eine eingefahrene Position und Figur 17 eine ausgefahrene Position der Schubkette 41. In Figur 17 sind einige Kettenglieder 43 entfernt, so dass die genaue Ausbildung der Antriebsvorrichtung 10 sichtbar ist.

Die Antriebsvorrichtung 10 umfasst eine Gewindewelle 12 und ein Antriebselement 98, insbesondere einen Motor, zum Antreiben bzw. Rotieren der Gewindewelle 12.

Hierbei wird die Schubkette 41 mittels der Gewindewelle 12 bewegt. Die Gewindewelle 12 ist auf einer unteren Seite des Tragelements 2 rotierbar angeordnet. Ferner verläuft die Gewindewelle 12 in einer Richtung parallel zur unteren Seite des Tragelements 2.

Zum Bewegen der Schubkette 41 durch die Gewindewelle 12 weisen die Kettenglieder 43 der Schubkette 41 jeweils eine durchgängige Öffnung 46 in einer Längsrichtung der Schubkette 41 auf, wobei auf einer Innenseite der Kettenglieder 43 ein Innengewinde 47 gebildet ist. Das Innengewinde 47 der Kettenglieder 43 ist mit der Gewindewelle 12 eingreifbar.

Wie sich insbesondere aus Figuren 16 und 17 ergibt, steht die Gewindewelle 12 mit denjenigen Kettengliedern 43 der Schubkette 41 im Eingriff, die zu einem beliebigen Zeitpunkt parallel zum Tragelement 2 angeordnet sind, d.h. bevor diese umgelenkt werden.

Dabei wird eine durch das Antriebselement 98 verursachte Rotation der Gewindewelle 12 in eine translatorische Bewegung der Kettenglieder 43 und somit auch der Schubkette 41 umgewandelt. Somit kann die Schubkette 41 durch das Zusammenwirken der Innengewinde 47 der Kettenglieder 43 mit der Gewindewelle 12 am Tragelement verschoben werden. Dadurch kann ein an der Schubkette 41 angebrachtes antreibbares Rotationselement 3 (Figur 13) gehoben oder gesenkt werden.

Die Schubkette 41 ist ferner insbesondere in einer Führungsschiene 99 aufgenommen, die auch ein Umlenkungselement 80 bzw. einen Umlenkungsbereich aufweist. Es ist aber auch möglich, dass eine Führungsschiene benutzt wird, die sich nur parallel zum Tragelement 1 erstreckt, d.h. dass die Führungsschiene keinen Umlenkungsbereich aufweist.

Die Führungsschiene 99 ist insbesondere derart ausgestaltet, dass die Schubkette 41 dreiseitig, d.h. an/von drei Seiten, geführt wird. Die Führungsschiene 99 ist Teil einer Führungsvorrichtung 8.

In Figuren 14 und 15 ist weiterhin zu erkennen, dass die Kettenglieder 43 eine Ausnehmung 48, die mit der Öffnung 46 kommuniziert. Insbesondere ist die Ausnehmung 48 schlitzförmig. Somit können die Kettenglieder 43 umgelenkt werden, wenn die Kettenglieder 43 das Ende der Gewindewelle 12 erreichen.

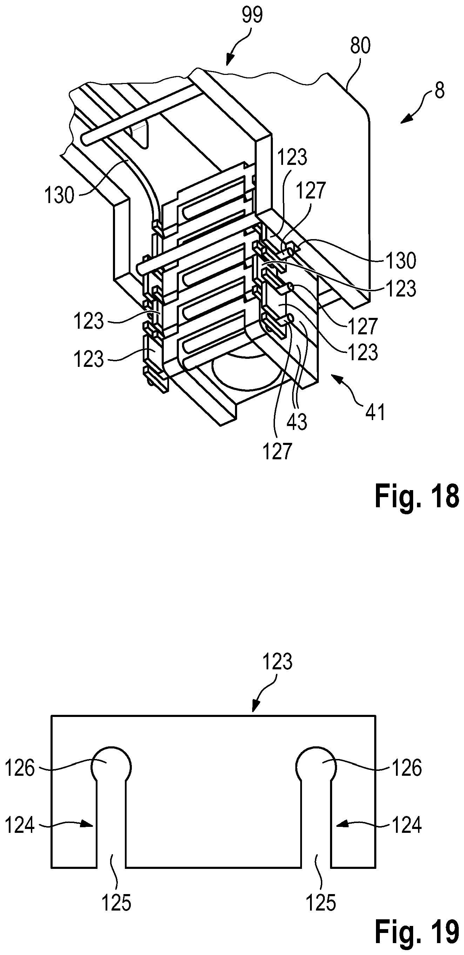

Figur 18 zeigt eine vereinfachte, schematische perspektivische Ansicht eines Bereichs eines Transportsystems 1 gemäß einem achten Ausführungsbeispiel der vorliegenden Erfindung.

Beim Transportsystem 1 gemäß diesem Ausführungsbeispiel ist eine Führungsvorrichtung 8 für die Schubkette 41 vorgesehen. Die Führungsvorrichtung 8 umfasst eine Führungsschiene 99, die wiederum ein Umlenkungselement 80 bzw. einen Umlenkungsbereich aufweist.

Die Führungsschiene 99 ist insbesondere derart ausgebildet, dass eine zweiseitige Führung der Schubkette 41, d.h. eine Führung der Schubkette 41 an/von zwei Seiten, ermöglicht wird.

Zusätzlich zur Führungsschiene 99 umfasst die Führungsvorrichtung 18 eine Mehrzahl von gleich ausgebildeten formschlüssigen Führungselementen 123.

In Figur 19 ist eines der formschlüssigen Führungselemente 123 vergrößert dargestellt.

Das formschlüssige Führungselement 123 ist eingerichtet, zwei nacheinander folgende Kettenglieder 43 derart miteinander zu verbinden, dass ein Einknicken der Kettenglieder 43 in der senkrechten Position der Kettenglieder 43 vermieden wird.

Das formschlüssige Führungselement 123 ist vorzugsweise ein Schnappverbindungselement.

Insbesondere ist das formschlüssige Führungselement 123 ein federndes Bauteil, insbesondere ein federndes Blech, welches zwei Ausnehmungen 124 aufweist. Jede der Ausnehmungen 124 weist einen länglichen Bereich 125 und einen kreisförmigen Bereich 126 auf, wobei der kreisförmige Bereich 126 einen größeren Durchmesser als eine Breite des länglichen Bereichs 125 aufweist. Andere Formen für die Ausnehmung 124 sind natürlich auch möglich, wobei es aber wichtig ist, dass die Ausnehmung zwei Bereiche aufweist, die ein unterschiedliches Maß senkrecht zur Einpressrichtung des Einpresselements in die Ausnehmung haben.

Zum Herstellen einer Verbindung bzw. einer Schnappverbindung zwischen zwei benachbarten Kettengliedern 43 der Schubkette 41 ist in jedem Kettenglied 43 ein Einpresselement 127, insbesondere ein Einpressstift, vorgesehen. Das Einpresselement 127 wird über den länglichen Bereich 125 in den kreisförmigen Bereich 126 der Ausnehmung 124 des formschlüssigen Führungselementes 123 eingepresst. Die Funktion der Führungselemente 123 besteht darin, einen festen Abstand zwischen den Einpresselementen 127 zu gewährleisten. Damit wird ein Verkippen um beide Achsen senkrecht zu einer vertikalen Bewegungsrichtung der Schubkette verhindert, also sowohl um die Achse der Einpresselemente 127 als auch um die Achse senkrecht dazu.

Aus Figur 18 geht hervor, dass formschlüssige Führungselemente 123 an zwei Seiten der Schubkette 41 vorgesehen sind, so dass ein erstes Ende eines Einpresselementes 127 in die Ausnehmung 124 eines ersten formschlüssigen Führungselementes 123 und ein zweites Ende desselben Einpresselementes 127 in die Ausnehmung 124 eines zweiten formschlüssigen Führungselementes 123 eingepresst wird.

Des Weiteren sind die Einpresselemente 127 derart ausgebildet, dass die Enden mindestens eines, insbesondere jedes Einpresselementes 127, jeweils in einer Führungsnut bzw. Führungsausnehmung 130 angeordnet sind. Die Führungsausnehmungen 130 sind in der Führungsschiene 99 gebildet.

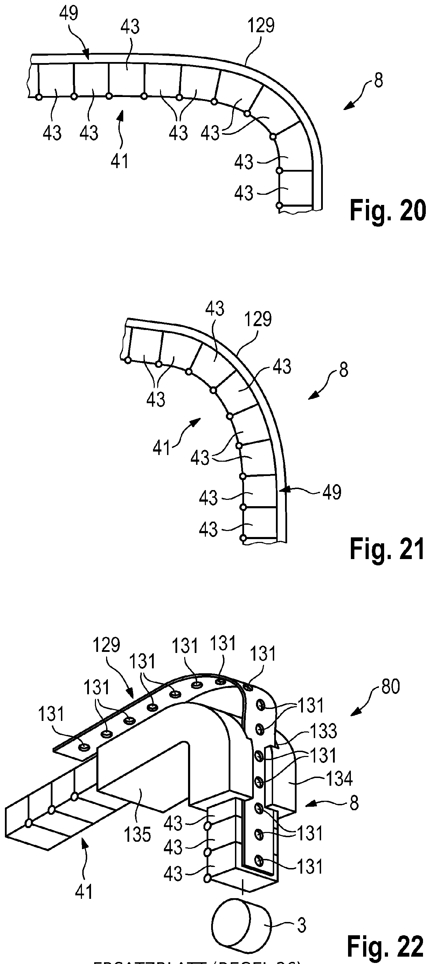

Die Figuren 20 und 21 zeigen eine vereinfachte, schematische Ansicht eines Bereichs eines Transportsystems 1 mit einer Führungsvorrichtung 8 für eine Schubkette 41 nach einem neunten Ausführungsbeispiel der vorliegenden Erfindung.

Die Führungsvorrichtung 8 umfasst ein Führungsband 129, welches an der Schubkette 41 derart angeordnet ist, dass ein Einknicken der Schubkette 41 verhindert wird. Insbesondere ist das Führungsband 129 auf der Seite 49 der Schubkette 41 angeordnet, auf der die Kettenglieder 43 der Schubkette 43 nicht miteinander bzw. nicht schon miteinander zum Bilden der Schubkette 41 verbunden sind. Die Seite 49 ist mit anderen Worten gegenüber der Seite der Schubkette 31, auf der die Kettenglieder 43 zum Bilden der Schubkette 41 gelenkig miteinander verbunden sind.

Das Führungsband 129 ist insbesondere an einem ersten Kettenglied 43 und einem letzten Kettenglied 43 befestigt. Das Führungsband 129 ist ferner dabei eingerichtet, eine Zugkraft auf die Schubkette 41 in einer Richtung auszuüben, in der die nicht miteinander verbundenen Enden der Kettenglieder 43 zusammenbringbar sind.

Zudem ist das Führungsband 129 biegsam ausgebildet, so dass das Führungsband 129 an die jeweilige Form der Schubkette 41 je nach Position der Schubkette 41 angepasst wird.

Wie aus den Figuren 20 und 21 ersichtlich ist, bleibt eine Länge des Führungsbandes 129 gleich über die ganze Bewegungsstrecke der Schubkette 41, insbesondere solange ein Krümmungsbereich des Führungsbandes 129 vollständig erhalten bleibt.

Das Führungsband 129 kann beispielsweise aus einem elastisch vorformbaren Kunststoff oder einem Metall gebildet sein. So kann das Führungsband 129 zum Beispiel als Gummiband oder Blechband ausgebildet sein.

Figur 22 zeigt eine Schubkette 41 mit einer Führungsvorrichtung 8 gemäß einem zehnten Ausführungsbeispiel der Erfindung.

Aus Figur 22 ergibt sich, dass die Führungsvorrichtung 8 ein Führungsband 129 und ein Umlenkungselement 80 aufweist. Das Umlenkungselement 80 hat einen zum Tragelement 2 parallelen Bereich 135 und einen zum Tragelement 2 senkrechten Bereich 134.

Das Führungsband 129 weist eine Vielzahl von ersten Eingriffselementen 131 und die Schubkette 41 eine Vielzahl von zweiten Eingriffselementen 132 auf. Insbesondere ist ein zweites Eingriffselement 132 in jedem Kettenglied der Schubkette 41 gebildet. Das zweite Eingriffselement 132 eines Kettengliedes 43 und das entsprechende erste Eingriffselement 131 des Führungsbandes 129 sind miteinander eingreifbar, wenn das Kettenglied 43 in eine Position gebracht wird, in der das Kettenglied 43 senkrecht zum Tragelement 2 steht.

Dazu weist das Umlenkungselement 80 im zum Tragelement 2 senkrechten Bereich 134 eine Führung 133 auf, durch die das Führungsband 129 auf die Schubkette 41 gepresst wird. Dadurch kommen das erste Eingriffselement 131 und das zweite Eingriffselement 132 in Eingriff miteinander, wodurch ein Kettenglied 43 mit seinem benachbarten Kettenglied 43 verbunden wird.

Diese Funktionsweise gilt insbesondere für alle Kettenglieder 43 der Schubkette 41 außer dem Kettenglied 43, an dem das entsprechende antreibbare Rotationselement 3 angeordnet ist. Dieses Kettenglied 43 ist insbesondere das Kettenglied 43, welches als erstes in die vertikale Position gebracht wird oder sich schon in der vertikalen Position befindet, wenn die Schubkette 41 ausgefahren wird. Dieses Kettenglied 43 ist mit dem Führungsband 129 fest verbunden.

So liegt der Teil des Führungsbandes 129, der sich zu einem beliebigen Zeitpunkt, insbesondere während des Senkens der Schubkette 41, in einer zum Tragelement 2 senkrechten Position befindet, auf der Schubkette 41 und ist mit dieser verbunden.

Auf der anderen Seite ist der Teil der Schubkette 41, der sich zu einem beliebigen Zeitpunkt parallel zum Tragelement 2 befindet, nicht mit dem Führungsband 129 verbunden. In diesem Fall ist der zum Tragelement 2 parallele Bereich 135 des Umlenkungselement 80 derart ausgebildet, dass dieser das Führungsband 129 nicht auf die Schubkette 41 drückt.

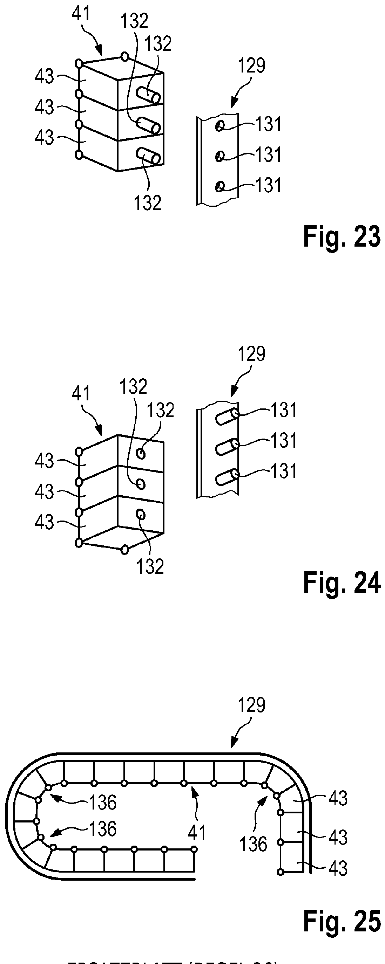

Nach einer ersten Variante, die in Figur 23 dargestellt ist, können die ersten Eingriffselemente 131 des Führungsbandes 129 als Ausnehmungen und die zweiten Eingriffselemente 132 der Kettenglieder 43 der Schubkette 41 als Noppen ausgebildet sein.

Nach einer zweiten Variante, die in Figur 24 gezeigt ist, können die ersten Eingriffselemente 131 des Führungsbandes 129 als Noppen und die zweiten Eingriffselemente 132 der Kettenglieder 43 der Schubkette 41 als Ausnehmungen ausgebildet sein.

Durch diese Ausgestaltung der Führungsvorrichtung 8 wird erreicht, dass jeweils zwei benachbarte Kettenglieder 43 der Schubkette 41 beim Ausfahren der Schubkette 41 miteinander verbunden werden oder beim Einfahren der Schubkette 41 wieder voneinander getrennt werden.

Die zuvor beschriebene Ausgestaltung gemäß Figur 22 ist besonders vorteilhaft, wenn die Schubkette 41 nicht nur einen, sondern zwei oder mehrere Krümmungsbereiche 136 aufweist, etwa weil sie umgeschlagen wird, wie in der Figur 25 zu sehen ist.

In jedem der vorstehenden Ausführungsbeispiele sind vorzugsweise alle Hubeinheiten 4 des entsprechenden Transportsystems 1 bis auf die Länge der Schubketten 41, alle Elemente 5 und alle Führungsvorrichtungen 8 jeweils in gleicher Weise ausgebildet. Allerdings ist jede beliebige Kombination aus Hubeinheiten 4, Elementen 5 und Führungsvorrichtungen 8 möglich. So kann beispielsweise eine Führungsvorrichtung 8 einer Schubkette 41 einer Hubeinheit 4 (nur) ein Teleskop 89 aufweisen, wobei eine andere Führungsvorrichtung 8 einer Schubkette 41 einer anderen Hubeinheit 4 (nur) einen Scherenhubmechanismus 82 aufweisen kann. Es ist auch möglich, dass Hubeinheiten 4 gemäß den zuvor beschriebenen Ausführungsbeispielen in einem Transportsystem 1 miteinander kombinierbar sind.

Neben der vorstehenden schriftlichen Beschreibung der Erfindung wird zu deren ergänzender Offenbarung hiermit explizit auf die zeichnerische Darstellung der Erfindung in den Fig. 1 bis 21 Bezug genommen.

### Bezugszeichenliste

- 1: Transportsystem
- 2: Tragelement
- 3: antreibbares Rotationselement
- 4: Hubeinheit
- 5: Element
- 6: Umschaltvorrichtung
- 7: Vorrichtung
- 8: Führungsvorrichtung
- 9: Umschaltmechanismus
- 10: Antriebsvorrichtung
- 11: Bedienungseinrichtung
- 12: Gewindewelle
- 18: teleskopartiges Halteelement
- 19: klappbarer Sitz
- 30: Lauffläche
- 31: tonnenförmige Rolle
- 32: Drehelement am antreibbaren Rotationselement
- 33: Rotationselementträger
- 40: erstes Ende der Hubeinheit
- 41: Schubkette
- 42: Eingriffsbereich der Schubkette
- 43: Kettenglied
- 44: Öffnung der Schubkette
- 45: Öffnung des Kettengliedes
- 46: Öffnung des Kettengliedes
- 47: Innengewinde
- 48: Ausnehmung
- 49: Seite der Schubkette
- 50: Kardangelenk
- 51: Führung für das Element
- 52: Koppelelement
- 53: erstes Ende des Elementes
- 54: erstes Drehelement am ersten Ende des Elementes
- 55: zweites Drehelement am zweiten Ende des Elementes
- 56: zweites Ende des Elementes
- 61: erste Kupplung
- 62: zweite Kupplung
- 63: Welle mit Durchschubverzahnung
- 64: erste Welle mit Zahnrad
- 65: zweite Welle mit Durchschubverzahnung
- 66: Zahnrad (an der ersten Welle)
- 71: erste Vorrichtungswelle
- 72: zweite Vorrichtungswelle
- 73: erstes Vorrichtungszahnrad
- 74: Kegelverzahnung der ersten Vorrichtungswelle
- 75: Kegelverzahnung der zweiten Vorrichtungswelle
- 76: zweites Vorrichtungszahnrad
- 80: Umlenkungselement
- 81: weitere Schubkette (Nebenkette/Hilfskette)
- 82: Scherenhubmechanismus
- 83: erster Scherenarm
- 84: zweiter Scherenarm
- 85: dritter Scherenarm
- 86: vierter Scherenarm
- 87: erstes Ende des Scherenhubmechanismus
- 88: zweites Ende des Scherenhubmechanismus
- 89: Teleskop/ Teleskopvorrichtung
- 90, 91: Pfeile
- 92: Antriebselement
- 93: erstes Übertragungselement
- 94: zweites Übertragungselement
- 95: Übertragungselement
- 96: erstes Antriebselement
- 97: zweites Antriebselement
- 98: Antriebselement
- 99: Führungsschiene
- 100: Treppe (Wendeltreppe)
- 101 bis 105: Treppenstufen
- 110: erste Eingangswelle
- 111: zweite Eingangswelle
- 112: erste Zwischenwelle
- 113: zweite Zwischenwelle
- 114: dritte Zwischenwelle
- 115: erste Ausgangswelle
- 116: zweite Ausgangswelle
- 117: erstes Zahnrad der ersten Zwischenwelle
- 118: zweites Zahnrad der ersten Zwischenwelle
- 119: erstes Zahnrad der zweiten Zwischenwelle
- 120: zweites Zahnrad der zweiten Zwischenwelle
- 121: drittes Zahnrad der zweiten Zwischenwelle
- 122: Zahnrad der dritten Zwischenwelle
- 123: formschlüssiges Führungselement
- 124: Ausnehmung
- 125: länglicher Bereich
- 126: kreisförmiger Bereich
- 127: Einpresselement
- 129: Führungsband
- 130: Führungsausnehmung
- 131: erstes Eingriffselement
- 132: zweites Eingriffselement
- 133: Führung
- 134: zum Tragelement senkrechter Bereich
- 135: zum Tragelement paralleler Bereich
- 136: Krümmungsbereich
- l1: erste Länge
- l2: zweite Länge
- l3: dritte Länge
- A: erste Stellung des Antriebselementes
- B: zweite Stellung des Antriebselementes
- H: Hauptbewegungsrichtung
- R: Richtung
- L: Längsachse
- Q: Querachse
- V: Hochachse
- X: erste Stellung des Umschaltmechanismus
- Y: zweite Stellung des Umschaltmechanismus
- Z: dritte Stellung des Umschaltmechanismus

## Patentansprüche

1. Transportsystem (1), das insbesondere eingerichtet ist, eine Treppe zu befahren, umfassend:
• ein Tragelement (2),
• eine Mehrzahl von antreibbaren Rotationselementen (3), die jeweils um eine Rotationsachse zum Rollen auf einer Rollebene rotierbar sind, und
• eine Mehrzahl von Hubeinheiten (4),
• wobei jede Hubeinheit (4) an einem Ende mit einem antreibbaren Rotationselement (3) aus der Mehrzahl von antreibbaren Rotationselementen (3) verbunden ist,
• und wobei mindestens eine Hubeinheit (4) aus der Mehrzahl von Hubeinheiten (4) eine Schubkette (41) aufweist, die am Tragelement (2) verschiebbar angeordnet ist und ausgebildet ist, das entsprechende antreibbare Rotationselement (3) zu heben und/oder zu senken.

2. Transportsystem (1) nach Anspruch 1, wobei die Schubkette (41) in einem Winkel zur Hauptbewegungsrichtung (H) des Transportsystems (1) am Tragelement (2) angeordnet ist.

3. Transportsystem (1) nach einem der vorherigen Ansprüche, ferner umfassend ein Element (5), welches mit der Schubkette (41) derart gekoppelt ist, dass sich das Element (5) zusammen mit der Schubkette (41) bewegt, und welches eingerichtet ist, eine Rotationsbewegung um seine Längsachse durchzuführen.

4. Transportsystem (1) nach Anspruch 3, wobei die Schubkette (41) aus einer Mehrzahl von Kettengliedern (43) ausgebildet ist, welche jeweils eine durchgängige Öffnung (45) in Längsrichtung der Schubkette (41) aufweisen, wobei das Element (5) durch die durchgängigen Öffnungen (45) der Kettenglieder (43) der Schubkette (41) verläuft.

5. Transportsystem (1) nach Anspruch 3, wobei das Element (5) seitlich an der Schubkette (41) angeordnet ist.

6. Transportsystem (1) nach einem der Ansprüche 3 bis 5, wobei das Element (5) in einer Führung angeordnet ist.

7. Transportsystem (1) nach einem der Ansprüche 3 bis 6, wobei das Element (5) als biegsame Welle ausgebildet ist, die eingerichtet ist, Drehmomente zu übertragen.

8. Transportsystem (1) nach einem der Ansprüche 3 bis 6, wobei das Element (5) als eine Kardangelenkkette ausgebildet ist, die eine Mehrzahl von miteinander verbundenen Kardangelenken (50) umfasst.

9. Transportsystem (1) nach einem der Ansprüche 3 bis 8, wobei an einem ersten Ende (53) des Elementes (5) ein Zahnrad (54) angeordnet ist, welches in Eingriff mit einem Zahnrad (32) bringbar ist, welches am antreibbaren Rotationselement (3) angebracht ist.

10. Transportsystem (1) nach einem der Ansprüche 3 bis 9, wobei zum Antreiben der Schubkette (41) und des Elementes (5) ein gemeinsames Antriebselement (92) vorgesehen ist, welches über eine Umschaltvorrichtung (6) entweder mit der Schubkette (41) oder dem Element (5) verbindbar ist, so dass das Antriebselement (92) entweder die Schubkette (41) oder das Element (5) antreibt.

11. Transportsystem (1) nach Anspruch 10, wobei die Umschaltvorrichtung (6) eine erste Kupplung (61) zwischen dem Antriebselement (92) und dem Element (5) und eine zweite Kupplung (62) zwischen dem Antriebselement (92) und der Schubkette (41) aufweist, wobei das Antriebselement (92) über die erste Kupplung (61) mit dem Element (5) oder über die zweite Kupplung (62) mit der Schubkette (41) koppelbar ist,
oder
wobei die Umschaltvorrichtung (6) eine erste Welle (64) und eine zweite Welle (65) aufweist, wobei die erste Welle (64) an der zweiten Welle (65) drehbar angeordnet ist und ein Zahnrad (66) aufweist, über welches die Schubkette (41) antreibbar ist, und die zweite Welle (65) eine Durchschubverzahnung aufweist, über welche das Element (5) antreibbar ist, wobei vorzugsweise die zweite Welle (65) hohl ausgebildet ist und die erste Welle (64) in der zweiten Welle (65) drehbar angeordnet ist.

12. Transportsystem (1) nach einem der Ansprüche 3 bis 9, wobei ein erstes Antriebselement (96) und ein zweites Antriebselement (97) zum Antreiben des Elementes (5) und der Schubkette (41) vorgesehen sind, wobei jedes Antriebselement über einen Umschaltmechanismus (9) zum Antreiben des Elementes (5) oder der Schubkette (41) umschaltbar ist.

13. Transportsystem (1) nach einem der vorherigen Ansprüche, wobei eine Führungsvorrichtung (8) zum Führen der Schubkette (41) vorgesehen ist, welche insbesondere ein Teleskop (89) und/oder einen Scherenhubmechanismus (82) und/oder mindestens eine weitere Schubkette (81) und/oder ein Umlenkungselement (80) und/oder ein Führungsband (129) und/oder mindestens ein formschlüssiges Führungselement (123) und/oder eine Führungsschiene (99) aufweist.

14. Transportsystem (1) nach einem der vorherigen Ansprüche, wobei mindestens zwei Hubeinheiten (4) aus der Mehrzahl von Hubeinheiten (4) jeweils eine Schubkette (41) aufweisen und am Tragelement (2) in der Hauptbewegungsrichtung (H) nacheinander angeordnet sind, wobei die erste Schubkette (41) in der Hauptbewegungsrichtung (H) eine erste Länge (11) und die letzte Schubkette (41) in der Hauptbewegungsrichtung (H) eine zweite Länge (l2) aufweist, die kleiner als die erste Länge (11) ist.

15. Transportsystem (1) nach einem der Ansprüche 1 bis 9, 13 oder 14, wobei die Schubkette (41) aus einer Mehrzahl von Kettengliedern (43) ausgebildet ist, welche jeweils eine durchgängige Öffnung (46) in Längsrichtung der Schubkette (41) aufweisen, wobei mindestens ein Kettenglied (43) ein Innengewinde aufweist, welches mit einer Gewindewelle (12) eingreifbar ist.

## Claims

1. A transport system (1), which is particularly adapted to travel up a staircase, comprising:
- a carrying element (2),
- a plurality of drivable rotation elements (3), each rotatable about a rotation axis for rolling on a rolling plane, and
- a plurality of lifting units (4),
- wherein each lifting unit (4) is connected at an end with a drivable rotation element (3) of the plurality of drivable rotation elements (3),
- and wherein at least one lifting unit (4) of the plurality of lifting units (4) comprises a push chain (41), which is slideably arranged at the carrying element (2) and is formed to lift and/or lower the corresponding drivable rotation element (3).

2. The transport system (1) according to claim 1, wherein the push chain (41) is arranged at the carrying element (2) at an angle to the main movement direction (H) of the transport system (1).

3. The transport system (1) according to any one of the preceding claims, further comprising an element (5), which is coupled to the push chain (41), so that the element (5) moves together with the push chain (41), and which is arranged to perform a rotation movement about its longitudinal axis.

4. The transport system (1) according to claim 3, wherein the push chain (41) is formed of a plurality of chain links (43), each of which comprises a through opening (45) in the longitudinal direction of the push chain (41), wherein the element (5) passes through the through openings (45) of the chain links (43) of the push chain (41).

5. The transport system (1) according to claim 3, wherein the element (5) is arranged laterally at the push chain (41).

6. The transport system (1) according to one of the claims 3 to 5, wherein the element (5) is arranged in a guide.

7. The transport system (1) according to one of the claims 3 to 6, wherein the element (5) is formed as a bendable shaft, which is arranged to transmit torques.

8. The transport system (1) according to one of the claims 3 to 6, wherein the element (5) is formed as a universal joint chain, which comprises a plurality of interconnected universal joints (50).

9. The transport system (1) according to one of the claims 3 to 8, wherein at a first end (53) of the element (5) a gear wheel (54) is arranged, which can be brought into engagement with a gear wheel (32), which is attached to the drivable rotation element (3).

10. The transport system (1) according to one of the claims 3 to 9, wherein for driving the push chain (41) and the element (5), a common drive element (92) is provided, which can be connected via a switching device (6) either to the push chain (41) or to the element (5), so that the drive element (92) drives either the push chain (41) or the element (5).

11. The transport system (1) according to claim 10, wherein the switching device (6) comprises a first coupling (61) between the drive element (92) and the element (5) and a second coupling (62) between the drive element (92) and the push chain (41), wherein the drive element (92) can be coupled to the element (5) via the first coupling (61) or to the push chain (41) via the second coupling (62),
or
wherein the switching device (6) comprises a first shaft (64) and a second shaft (65), wherein the first shaft (64) is rotatably arranged at the second shaft (65) and comprises a gear wheel (66), via which the push chain (41) is drivable, and the second shaft (65) comprises a push-through toothing, via which the element (5) is drivable, wherein preferably the second shaft (65) is formed to be hollow and the first shaft (64) is rotatably arranged in the second shaft (65).

12. The transport system (1) according to one of the claims 3 to 9, wherein a first drive element (96) and a second drive element (97) are provided for driving the element (5) and the push chain (41), wherein each drive element is switchable via a switching mechanism (9) for driving the element (5) or the push chain (41).

13. The transport system (1) according to one of the previous claims, wherein a guide device (8) is provided for guiding the push chain (41), which comprises particularly a telescope (89) and/or a scissor lift mechanism (82) and/or at least one further push chain (81) and/or a deflection element (80) and/or a guide band (129) and/or at least one form-fitting guide element (123) and/or a guide rail (99).

14. The transport system (1) according to any one of the preceding claims, wherein at least two push units (4) of the plurality of push units (4) each comprise a push chain (41) and are sequentially arranged at the carrying element (2) in the main movement direction (H), wherein the first push chain (41) comprises a first length (11) in the main movement direction (H) and the last push chain (41) comprises a second length (l2) in the main movement direction (H), which is smaller than the first length (11).

15. The transport system (1) according to any one of claims 1 to 9, 13 or 14, wherein the push chain (41) is formed of a plurality of chain links (43), each of which comprises a through opening (46) in the longitudinal direction of the push chain (41), wherein at least one chain link (43) comprises an internal thread, which is engageable with a threaded shaft (12).

## Revendications

1. Système de transport (1), qui est mis au point en particulier pour emprunter un escalier, comprenant :
- un élément de support (2),
- une pluralité d'éléments de rotation (3) pouvant être entraînés, qui peuvent tourner respectivement autour d'un axe de rotation pour rouler sur un plan de roulement, et
- une pluralité d'unités de levage (4),
- dans lequel chaque unité de levage (4) est reliée sur une extrémité à un élément de rotation (3) pouvant être entraîné issu de la pluralité d'éléments de rotation (3) pouvant être entraînés,
- et dans lequel au moins une unité de levage (4) issue de la pluralité d'unités de levage (4) présente une chaîne de poussée (41), qui est disposée de manière à pouvoir coulisser sur l'élément de support (2) et est réalisée pour lever et/ou baisser l'élément de rotation (3) pouvant être entraîné correspondant.

2. Système de transport (1) selon la revendication 1, dans lequel la chaîne de poussée (41) est disposée sur l'élément de support (2) selon un angle par rapport à la direction de déplacement principale (H) du système de transport (1).

3. Système de transport (1) selon l'une quelconque des revendications précédentes, comprenant en outre un élément (5), lequel est couplé de telle manière à la chaîne de poussée (41) que l'élément (5) se déplace conjointement avec la chaîne de poussée (41), et lequel est mis au point pour réaliser un déplacement par rotation autour de son axe longitudinal.

4. Système de transport (1) selon la revendication 3, dans lequel la chaîne de poussée (41) est réalisée à partir d'une pluralité de maillons de chaîne (43), lesquels présentent respectivement une ouverture continue (45) dans le sens longitudinal de la chaîne de poussée (41), dans lequel l'élément (5) s'étend à travers les ouvertures continues (45) des maillons de chaîne (43) de la chaîne de poussée (41).

5. Système de transport (1) selon la revendication 3, dans lequel l'élément (5) est disposé latéralement sur la chaîne de poussée (41).

6. Système de transport (1) selon l'une quelconque des revendications 3 à 5, dans lequel l'élément (5) est disposé dans un guide.

7. Système de transport (1) selon l'une quelconque des revendications 3 à 6, dans lequel l'élément (5) est réalisé en tant qu'un arbre flexible, qui est mis au moins pour transmettre des couples de rotation.

8. Système de transport (1) selon l'une quelconque des revendications 3 à 6, dans lequel l'élément (5) est réalisé comme une chaîne à joints de cardan, qui comprend une pluralité de joints de cardan (50) reliés entre eux.

9. Système de transport (1) selon l'une quelconque des revendications 3 à 8, dans lequel est disposée sur une première extrémité (53) de l'élément (5) une roue dentée (54), laquelle peut être amenée en prise avec une roue dentée (32), laquelle est installée sur l'élément de rotation (3) pouvant être entraîné.

10. Système de transport (1) selon l'une quelconque des revendications 3 à 9, dans lequel est prévu, pour entraîner la chaîne de poussée (41) et l'élément (5), un élément d'entraînement (92) commun, lequel peut être relié soit à la chaîne de poussée (41) soit à l'élément (5) par l'intermédiaire d'un dispositif de commutation (6) de telle sorte que l'élément d'entraînement (92) entraîne soit la chaîne de poussée (41) soit l'élément (5).

11. Système de transport (1) selon la revendication 10, dans lequel le dispositif de commutation (6) présente un premier couplage (61) entre l'élément d'entraînement (92) et l'élément (5) et un deuxième couplage (62) entre l'élément d'entraînement (92) et la chaîne de poussée (41), dans lequel l'élément d'entraînement (92) peut être couplé à l'élément (5) par l'intermédiaire du premier couplage (61) ou à la chaîne de poussée (41) par l'intermédiaire du deuxième couplage (62),
ou
dans lequel le dispositif de commutation (6) présente un premier arbre (64) et un deuxième arbre (65), dans lequel le premier arbre (64) est disposé de manière à pouvoir tourner sur le deuxième arbre (65) et présente une roue dentée (66), par l'intermédiaire de laquelle la chaîne de poussée (41) peut être entraînée, et le deuxième arbre (65) présente une denture de poussée totale, par l'intermédiaire de laquelle l'élément (5) peut être entraîné, dans lequel de préférence le deuxième arbre (65) est réalisé de manière creuse et le premier arbre (64) est disposé de manière à pouvoir tourner dans le deuxième arbre (65).

12. Système de transport (1) selon l'une quelconque des revendications 3 à 9, dans lequel un premier élément d'entraînement (96) et un deuxième élément d'entraînement (97) sont prévus pour entraîner l'élément (5) et la chaîne de poussée (41), dans lequel chaque élément d'entraînement peut être commuté par l'intermédiaire d'un mécanisme de commutation (9) pour entraîner l'élément (5) ou la chaîne de poussée (41).

13. Système de transport (1) selon l'une quelconque des revendications précédentes, dans lequel un dispositif de guidage (8) est prévu pour guider la chaîne de poussée (41), lequel présente en particulier un télescope (89) et/ou un mécanisme de levage à ciseaux (82) et/ou au moins une autre chaîne de poussée (81) et/ou un élément de déviation (80) et/ou une bande de guidage (129) et/ou au moins un élément de guidage à complémentarité de forme (123) et/ou un rail de guidage (99).

14. Système de transport (1) selon l'une quelconque des revendications précédentes, dans lequel au moins deux unités de levage (4) issues de la pluralité d'unités de levage (4) présentent respectivement une chaîne de poussée (41) et sont disposées l'une après l'autre dans la direction de déplacement principale (H) sur l'élément de support (2), dans lequel la première chaîne de poussée (41) présente dans la direction de déplacement principale (H) une première longueur (11) et la dernière chaîne de poussée (41) présente dans la direction de déplacement principale (H) une deuxième longueur (l2), qui est plus petite que la première longueur (11).

15. Système de transport (1) selon l'une quelconque des revendications 1 à 9, 13 ou 14, dans lequel la chaîne de poussée (41) est réalisée à partir d'une pluralité de maillons de chaîne (43), lesquels présentent respectivement une ouverture continue (46) dans le sens longitudinal de la chaîne de poussée (41), dans lequel au moins un maillon de chaîne (43) présente un filetage intérieur, lequel peut venir en prise avec un arbre fileté (12).
